(19) Europäisches Patentamt
European Patent Office
Office européen des brevets

(11) **EP 3 665 427 B1**

(12) **EUROPEAN PATENT SPECIFICATION**

(45) Date of publication and mention of the grant of the patent:
**10.01.2024 Bulletin 2024/02**

(21) Application number: **18759415.5**

(22) Date of filing: **07.08.2018**

(51) International Patent Classification (IPC):
**F28D 20/00** *(2006.01)*

(52) Cooperative Patent Classification (CPC):
**F28D 20/0056; F28D 20/0034;** F28D 2020/0021;
F28D 2020/0026; F28D 2020/0082; Y02E 60/14

(86) International application number:
**PCT/IB2018/055949**

(87) International publication number:
**WO 2019/030674 (14.02.2019 Gazette 2019/07)**

(54) **A STORAGE DEVICE FOR THERMAL ENERGY**

SPEICHERVORRICHTUNG FÜR WÄRMEENERGIE

DISPOSITIF DE STOCKAGE D'ÉNERGIE THERMIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.08.2017 IT 201700091905**

(43) Date of publication of application:
**17.06.2020 Bulletin 2020/25**

(73) Proprietor: **David S.R.L.**
**93100 Caltanissetta (IT)**

(72) Inventors:
• **GATTUSO, Calogero**
**I-93100 Caltanissetta (IT)**
• **SANTORO, Fabio**
**I-93100 Caltanissetta (IT)**
• **TUMMINELLI, Gianluca**
**I-93100 Caltanissetta (IT)**
• **TUZZOLINO, Gaetano**
**I-93100 Caltanissetta (IT)**

(74) Representative: **De Bonis, Paolo**
**Buzzi, Notaro & Antonielli d'Oulx S.p.A.**
**Corso Vittorio Emanuele II, 6**
**10123 Torino (IT)**

(56) References cited:
WO-A1-2017/130149   WO-A2-2011/055307
US-A1- 2011 189 619   US-A1- 2013 340 432
US-A1- 2016 097 603

**Description**

Field of the invention

The present invention regards storage devices for thermal energy, in particular static storage devices for thermal energy.

Prior art

The state of the art offers numerous examples of storage devices for thermal energy that use - as storage material - fluids such as water, diathermic oil or molten salts, and which typically include moving mechanical components for displacing and generally managing storage fluids, which can serve as energy thermovector fluids. Background document in this field include, i.a. US 2016/097603 A1 and WO 2011/055307 A2.

One of the main problems of such devices lies in the need for relatively intense maintenance to keep the device efficient, the possibility of occurrence of limescale, the possible need for adopting auxiliary heaters for starting operations with the aim of reducing the viscosity of the fluids. Furthermore, the heat storage devices based on heat storage fluids are susceptible to poor performance due to ineliminable inherent limits. A storage device for thermal energy generally comprises a flow duct for an working fluid that is in thermal exchange relationship with a thermo-accumulator unit.

If the thermo-accumulator unit uses fluid storage materials, when the storage material releases the stored thermal energy, it is subjected to the thermal energy quality degradation phenomena alongside the increase of entropy due to the back mixing, which causes the average storage temperature to drop. Thus, the result is the degradation of the remainder of the stored thermal energy and generally the quality of the heat transmitted to the working fluid, which is typically a fluid required by an appliance.

On the other hand, (static) storage devices for thermal energy in which the storage material is of the solid type include - for example - storage systems based on concrete for thermodynamic plants.

The storage material consists in a concrete block provided by casting, embedded in which are the service/process tubes, which pass through the entire block and regard one or more manifolds installed at the ends.

Though not requiring frequent maintenance and disassembly, a system of this type is limited by the poor thermodynamic performance of the storage material, in particular by a low thermal conductivity which leads to low thermal energy transfer speeds (long charge and discharge times) and a - though slow - degradation of the quality of the stored energy due to the thermal continuity between the various regions of the single, large mass of concrete.

Furthermore, it should be observed that the extremely low thermal conductivity of the concrete translates into the impossibility to manage high thermal powers, i.e. large amounts of energy transferred in the time unit, without having to use extensive exchange surfaces and large storage volumes.

This means that it is not possible, for example, to force the charge times by subjecting a concrete block to high temperatures and/or high charge fluid flow rates, without irreversibly damaging the storage system or extending the discharge times given that - due to the low conductivity of the material - the thermal drop is almost exclusively located in the bulk of the storage material and the actual driving force for the transfer of heat towards the discharge fluid is extremely low (quickly reaching a pseudo-stationary "saturation" condition in a more or less extensive region of storage material surrounding the thermo-vector unit).

Then there is the problem related to limiting the maximum manageable temperature, given that the concrete is already subjected to degradation at temperatures around 500°C, while refractory materials such as graphite can be used up to their melting temperature (above 3000°C), as long as in absence of contact with oxidising agents.

Lastly, both the presence of moving mechanical parts and use of storage fluids in storage systems for thermal energy of the known type, heavily affect the flexibility of the system given that the poor performance during the discharge step make series or parallel connections substantially impractical while maintaining an acceptable level of energy efficiency, just like it becomes challenging to guarantee a given fluid flow rate at constant temperature to an appliance over a given time interval without this entailing (elsewhere) an energy wastage higher that the energy recovery which would lead to exploiting the fluid flow rate.

Object of the invention

The object of the present invention is to overcome the aforementioned technical drawbacks. In particular, the object of the present invention is to provide a storage device for thermal energy that provides for low maintenance, high energy efficiency both during the charge step and during the discharge step, controllable charge and discharge times, a high exchange power / system mass ratio, a constant flow rate for dispensing to the user at a constant temperature (or, equivalently, a constant thermal power) and that is suitable for series or parallel connections in an extremely flexible manner and generally constitute a modular thermal storage array while minimising the back mixing and entropy increase phenomena.

## Summary of the invention

The present invention is a thermal storage device as defined by claim 1. The claims form an integral part of the technical disclosure herein provided regarding the invention.

Further preferred embodiments of the invention are defined by dependent claims 2-6.

## Brief description of the figures

Now, the invention will be described with reference to the attached figures, provided purely by way of non-limiting example, wherein:

- figure 1 is a partly exploded perspective view of a storage device for thermal energy according to a first embodiment of the invention,
- figures 2 and 3 each include a portion A and a portion B respectively illustrating an assembled perspective view and an exploded perspective view of a thermo-vector unit for a storage device for thermal energy according to the invention, where figure 2 and figure 3 illustrate two variants of the thermo-vector unit,
- figures 4 and 5 are two perspective views - in assembled condition - of storage devices for thermal energy using thermo-vector units respectively according to figures 2 and 3,
- figure 6 includes a portion A and a portion B which respectively represent a top and a bottom plan view of an array of storage devices for thermal energy according to the first embodiment of the invention,
- figure 7 is a schematic view illustrating the flow paths of the working fluid in the configurations of figures 6A and 6B,
- figures 8 and 9 each include a portion A and a portion B and they illustrate two variants of a second embodiment of the invention, in which the portions A illustrate an assembled perspective view and the portions B illustrate the same view highlighting the concealed lines for a better intelligibility of the interior structure of the device,
- figure 10 includes a portion A and a portion B which represent a top and bottom plan view of a possible solution of an array connection of devices of figures 8 and 9, while
- figure 11 represents still a further solution of a possible array connection of devices of figures 8 and 9,
- figure 12 includes a portion 12.1, a portion 12.2, and a portion 12.3 which illustrate operations for the charge, maintenance and discharge respectively of the storage devices according to the invention,
- figure 13 includes a portion 13.1 and a portion 13.2 which show a comparison between the discharge performance of an array of storage devices according to the invention and a fluid storage device of the known type,
- figure 14 illustrates the perspective view of a further embodiment of a storage device for thermal energy according to the invention,
- figure 15A is a longitudinal section of the device of figure 14, while figure 15B is a cross-section of the same device,
- figure 16 is a lateral view of an array of devices according to figure 14,
- figure 17 is a perspective view of an array of storage devices for thermal energy according to still a further embodiment of the invention,
- figures 17A, 17B are sectional views, respectively, according to lines XVIII A - XVIII A and XVII/B-XVII/B of figure 17,
- figure 17C illustrates thermal profiles of the array of figure 17 during a transient charge of the system,
- figures 18 and 19 respectively illustrate a modular unit and an array of devices according to figures 17, where the modular unit of figure 19 can be used for providing the array of figure 18, and
- figure 20 is a support circuit for an electric analogy model of an array of storage devices according to the invention.

## Detailed description of preferred embodiments of the invention

By way of introduction to the detailed description that follows, the following list of parameters commonly referred to in the industry by the expression *figure of merit* (FOM), i.e. performance indicators useful for characterising the storage capacity of the thermal storage systems, must be considered.

i) Specific storable energy ($E_{wt}$), as the maximum energy that can be absorbed during charge or, equivalently, that can be transferred during discharge - considering the same operating temperature range - by the mass unit of the storage material from the/to the thermovector fluidthermo-vector fluid and thus available therefor to the user, which includes the energy absorbed/transferred should the thermal storage material be subjected to changes of state (melting/ solidification or boiling/liquefaction), or

ii) Volumetric storable energy ($E_{vol}$), as the maximum energy that can be absorbed during charge or, equivalently, that can be transferred during discharge - considering the same operating temperature range - by the volume unit of the storage material from the/to the thermovector fluidthermo-vector fluid and thus available therefor to the user, which includes the energy absorbed/transferred should the thermal storage material be subjected to changes of state (melting/solidification or boiling/condensation).

A material with high values of $E_{wt}$ - and similarly with high values of $E_{vol}$ - is capable of storing a higher amount of energy respectively for the mass unit or in the volume unit, with respect to a material with low Ewt values or low Evol values.

iii) Maximum operating temperature ($T_{max}$), as the maximum admissible temperature for the storage material, such to avoid the thermal deterioration thereof, i.e. such to preserve the chemical/physical identity and wholeness of the material.

As concerns the choice of the storage material, a material with high Tmax value is preferred, so that it can store a better quality energy, given that it is available at a higher temperature, as compared to a material with low Tmax value, on condition that an energy source, a thermovector fluidthermo-vector fluid and a hydraulic piping system compatible with said high Tmax value, are available.

iv) Thermal diffusivity ($\alpha$), as ratio between the thermal conductivity ($\kappa$) of the storage material (if solid, or susceptible to exchange heat exclusively through conductive motions or the equivalent thermal conductivity (as defined herein, if liquid, or susceptible to exchange heat even through convective motions) and the product between specific heat ($c_p$) and density ($\rho$) thereof: this physical quantity is an inherent property of the storage material (function of the temperature thereof) in that it exclusively depends on the property thereof, and it is useful for describing the propagation of a thermal field in non-stationary conditions.

A material with high thermal diffusivity $\alpha$ allows a thermal flow to pass through it more easily if subjected to a temperature gradient and thus guarantees better transmission of the thermal wave as compared to material with low thermal diffusivity $\alpha$.

Furthermore, the following indices useful for comparing the performance of the system subject of the invention as compared to other previously existent solutions, are defined:

iv) Characteristic time constant ($\tau$) of the single storage module, which represents the time required to reach 63.2% of the storage capacity. By analogy with the time constant of an electrical circuit RC, in this case the time constant solely depends on the inherent characteristics of the material used and the geometry of the system. In particular, in case of solid storage materials, the time constant can be expressed as:

$$\tau = (\lambda/\kappa_{acc})/(n_{tubi} \cdot S_{tubo}) \cdot \rho_{acc} \cdot V_{acc} \cdot c_{p,acc}$$

where $\lambda$ is a characteristic measurement of the equivalent average distance of thermal exchange between the thermovector unit and the thermo-accumulator unit (penetration distance of the thermal wave assessable experimentally); $\kappa_{acc}$, $\rho_{acc}$, $c_p$, acc are respectively the thermal capacity, density and specific heat of the storage material (average values in the operating temperature range); $n_{tubi}$ is the number of tubes of the thermo-vector unit; $S_{tubo}$ is the exchange surface between the thermo-vector unit and the thermo-accumulator unit; $V_{acc}$ is the volume of the thermo-accumulator unit.

In case of liquid storage material, the time constant can instead be expressed as:

$$\tau = (\lambda/\kappa_{acc,eq})/(n_{tubi} \cdot S_{tubo}) \cdot \rho_{acc} \cdot V_{acc} \cdot c_{p,acc,eq}$$

where the symbols maintain the same physical meaning as in the case of solid material described above, except for $\kappa$acc,eq which is the equivalent conductivity of the storage liquid and cp,acc,eq which is the equivalent specific heat of the storage liquid.

The equivalent conductivity of the storage liquid is a conductivity increased by a factor equal to *Nu,* Nusselt number,

$$\kappa_{acc,eq} = \kappa_{acc} \cdot Nu$$

to consider the presence of natural convective motions, the latter commonly being defined as:

$$Nu = h \cdot L/\kappa$$

where h is the coefficient of thermal exchange by natural convection, L is a characteristic distance of the system and $\kappa$

is the thermal conductivity. The Nusselt number for a given system can be provided from the empirical correlations widely known and available in literature, applicable to systems of various and several geometries and provisions regarding ducts affected by the mass and thermal flows, and as a function of the flow regimes (natural or forced), regarding which reference shall be made to other sources.

Supposing for example that the thermal storage fluid be subjected to only one type of phase change during the operating cycle (melting/solidification or, alternatively, boiling/condensation), the equivalent specific heat of the storage liquid can be defined as:

$$c_{p,acc,eq} = c_{p,acc} + r/(T_{cf} - T_{rif})$$

where r is the phase change latent heat (melting/boiling, in the charge step, solidification/condensation, in the discharge step); $T_{cf}$ is the temperature at which phase change occurs; $T_{rif}$ is a reference temperature (comparable to the minimum temperature of the operating cycle, during charge step, or the maximum temperature of the operating cycle, during discharge step); $c_{p,acc}$ is the specific heat of the storage material (average between the phase change temperature and the reference temperature).

It should be observed that as concerns the applicability of the present invention, any mechanical displacement of the fluids used as thermal storage fluids being ruled out a priori, reference can be made to the heat transfer mechanism by conduction or, at most, to the natural convection mechanism, though the latter can cause degradation of the quality of the stored energy over time, due to the reasons outlined above in the description.

Similarly to what is known in the electro-technical field with reference to a simple RC circuit, the time constant is useful to establish the duration of the charge and discharge transients of the system: the charge/discharge transient can be deemed completed after a period of time equal to $5\tau$.

v) Average charge time per stored energy unit($\tau_{spec}$), which represents the time required to reach a 99.3%, charge normalised with respect to the stored energy:

$$\tau_{spec} = 5\tau/(E_{wt}\cdot m_{acc}) = 5\tau/(E_{vol}\cdot V_{acc})$$

A system with high $\tau_{spec}$ values requires a lot of time to store/transfer the thermal energy unit during charge/discharge step and thus offers lower performance with respect to one with low rspec values, considering the same operating conditions of the operating cycle.

vi) The exchange surface required per transferred thermal power unit ($\sigma_\tau$), which gives an indication of the exchange surface between the thermovector fluidthermo-vector fluid and the storage material required to transfer the thermal energy unit per time unit up to reaching a 63.2% charge: this index is conceptually comparable to the inverse of the thermal flow exchanged between the thermovector fluidthermo-vector fluid and the storage material, assessed after a period of time equal to characteristic constant $\tau$ of the system (63.2% charge):

$$\sigma_\tau = S_{scambio}\cdot\tau/E_\tau$$

where $E\tau$ is the energy stored after a time $\tau$, equal to 63.2% of the maximum storable energy.

This parameter is useful for comparing storage systems characterised, besides by the materials, by the different geometries of the thermo-accumulator unit and thermo-vector unit alike, from the moment when the exchange surface between the two becomes a factor.

A system with high $\sigma_\tau$ values requires larger exchange surfaces to transfer the thermal power unit in the charge/discharge step, considering the same achieved charge, or it is consequently more cumbersome and complex due to the high number of tubes required, considering the same amount of total stored energy, as compared to one with low $\sigma_\tau$ values.

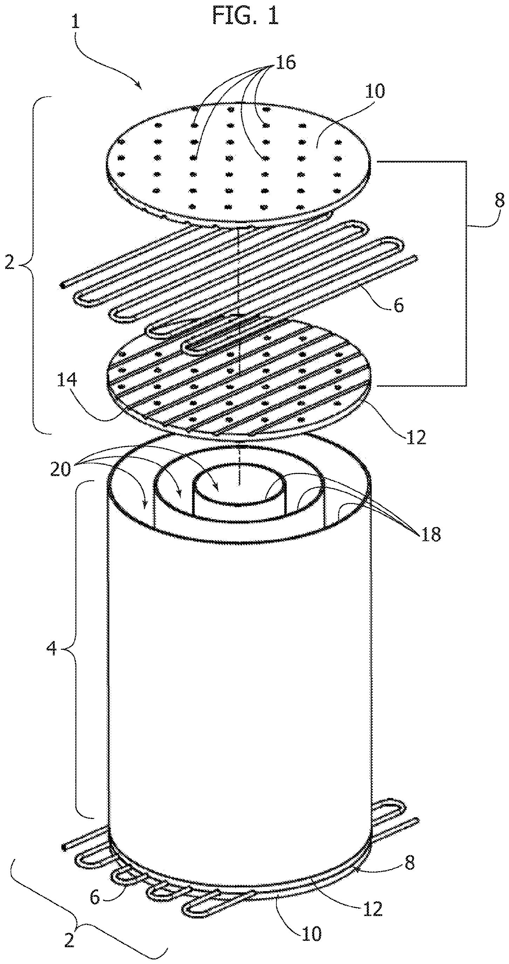

The reference number 1 in figure 1 generally indicates a storage device for thermal energy according to a first preferred embodiment of the invention. The storage device 1 includes at least one thermo-vector unit 2 and a thermo-accumulator unit 4. As it will be clearer hereinafter from the entire description of the application, the distinction between "thermo-vector unit" and "thermo-accumulator unit" is primarily for functional purposes. In some embodiments, like the devices 1, the distinction In this embodiment, the storage device 1 includes two thermo-vector units 2 and a thermo-accumulator unit 4 comprised therebetween.

The thermo-vector unit 2 includes a flow duct 6 for the through-flow of an working fluid which - in this embodiment - is provided as a coil duct with parallel loops, which extends into a thermally conductive matrix 8. The matrix 8 is made of high thermal conductivity material, for example copper, aluminium, and generally any material having a thermal conductivity exceeding 100-200 W·m$^{-1}$·K$^{-1}$, and which includes a first and a second circular-shaped plate 10, 12, each provided with parallel chordial plates 14 (i.e. extending along parallel chords of the geometric circumference of the plate) and with through holes 16.

The shape and the arrangement of the grooves 14 copy the extension of the coil which defines the flow duct 6 so that when the plates 10 and 12 are closed in a pack-like fashion on opposite sides of the coil 6, the grooves 14 define - when coupling - circular channels in which sections of the loops of the duct 6 are housed.

The holes 16 are arranged identically on both plates 10, 12 so as to be aligned during coupling and so as to consequently direct the bolts or screws (in the latter case on one of two plates of the holes 16 - without prejudice to the fact that the alignment with the holes on the other plate - could be of the non-through type) to keep the assembly closed in a pack-like fashion.

The thermo-accumulator unit 4 includes a casing which provides for one or more concentric jackets 18. In this embodiment there are provided for three concentric jackets 18, one of which is outer and contains the other two.

The three jackets 18 identify an equal number of internal volumes 20 within which there is arranged a thermal storage material, which - according to the invention - is a solid material, or a liquid material, or a two-phase combination of the two (suspension of solids in a liquid) with high thermal conductivity $\kappa$, preferably greater than 30 W·m$^{-1}$·K$^{-1}$, with high specific heat, preferably greater than 400 J/(kg·K), and with high thermal diffusivity $\alpha$, preferably greater than 10 mm$^2$/s.

A preferred solution according to the invention (generally applicable to all embodiments illustrated in the present description) is to use a solid pulverulent material as is, and more generally with grain size comprised between 0.1 $\mu$m and 150 $\mu$m, so that it can be sufficiently compactable, or a granular solid material, and more generally with grain size comprised between 1 mm and 20 mm, submerged in a second material of the fluid type, to form a two-phase thermal storage material, to adapt the performance parameters thereof to the optimal operating values identified for the purposes of applicability of the present invention. The thermal conductivity values, thermal capacity and thermal diffusivity provided herein regarding the matrix 8 and the thermal storage material are valid for all embodiments described herein, same case applying to the grain size values of the thermal storage material.

A coherent solid material, i.e. a compact and non-granular or otherwise fractionated structure can obviously be used.

Materials that can be used for thermal storage purposes for example include graphite, in monolithic form, fine or micronised pulverulent form, aluminium or its alloys, cast iron, or even composite materials or lastly mixtures of various materials, even containing materials known to be poorly conductive such as sand or basalt serving as a filler, whose performance generally falls within intervals that the inventors indicated to be instrumental towards achieving the technical effect of the present invention. The intervals in question are defined in table 1 attached to this description.

The inventors observed that in order to achieve the performance objectives on which the invention is based, the storage material must be selected so as to have both a high volumetric thermal capacity (product between specific heat cp and density $\rho$), so as to store as much heat as possible without suddenly increasing its temperature - given that this would stop the charging process due to saturation - as well as high thermal conductivity.

With reference to the performance indicators (FOM) listed at the beginning of the detailed description of the invention, the inventors thus observed that thermal diffusivity $\alpha$, which binds the parameters in question, is the distinctive parameter towards achieving the performance objectives on which the invention is based.

As previously observed, the thermal diffusivity $\alpha$ should be greater than a first threshold value, but in the meantime it should avoid exceeding a second threshold value, greater than the first

This due to the fact that, considering the definition of thermal diffusivity, low diffusivity values entail material with low thermal conductivity and high thermal capacity. Below the first threshold value, that the inventors established to be 10 mm$^2$/s for acceptable performance as concerns the present invention, 35 mm2/s for best performance, and 50 mm$^2$/s for even better (optimal) performance, the thermal conductivity values of the available materials would be too low to ensure performance in line with the needs from a thermokinematic standpoint. On the contrary, were the thermal diffusivity values $\alpha$ to exceed the second threshold value, the inventors established this value to be at 150 mm$^2$/s for acceptable performance as concerns the present invention, 120 mm$^2$/s for better performance, and 100 mm$^2$/s for even better (optimal) performance, the thermal capacity values of the available materials would be too low with respect to storage requirements provided for the purposes that the present invention sets out to achieve.

Thus, as concerns the storage material, the following thermal diffusivity intervals are defined:

    i) 10 - 150 mm$^2$/s
    ii) more preferably 35 - 120 mm$^2$/s
    iii) even more preferably 50 - 100 mm$^2$/s.

Storage materials with thermal diffusivity values comprised between the extreme values indicated above allow - irrespective of the final geometry of the thermo-accumulator unit - meeting the performance goals in terms of charge dynamics, discharge dynamics and maintaining the fluid flow rate to the user at a desired temperature for a long time interval, and thus guarantee quick transfer of heat and, in conclusion, a high ratio between exchanged power and storage mass, a high ratio between stored energy and storage mass and a high ratio between storage mass and volume.

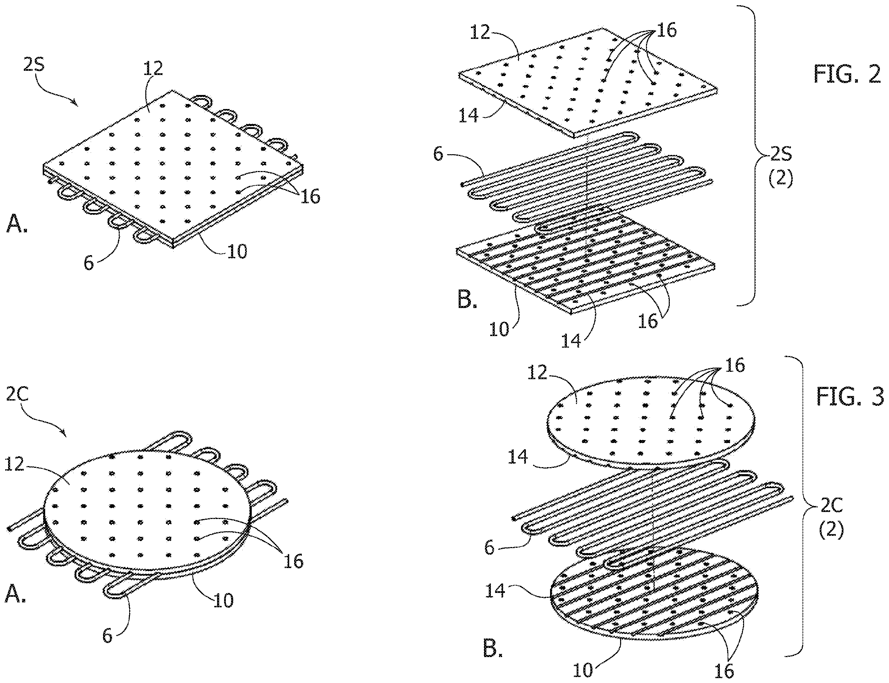

With reference to figures 2A, 2B and 3A, 3B, the thermo-vector unit 2 may conveniently be provided with a quadrangular/square geometry (figure 2) or circular geometry (figure 3). To this end, the units 2 with quadrangular geometry are respectively indicated by references 2S in figures 2, while those with circular geometry are indicated by references 2C in figures 3.

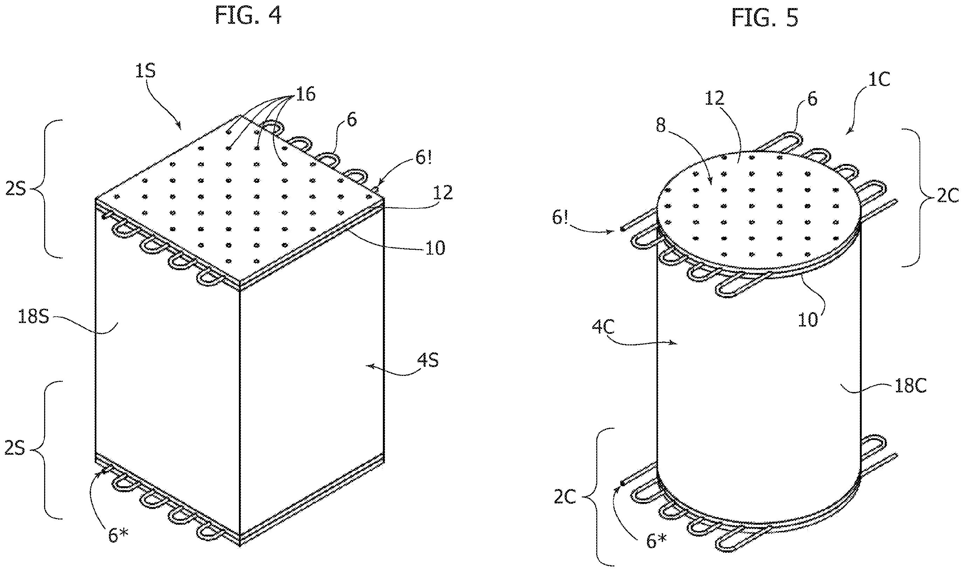

With reference to figure 4 and figure 5, the thermo-accumulator unit 4 preferably copies the geometry (sectional) of the thermo-vector units 2, and in particular when the thermo-vector units 2 are provided quadrangular-shaped even the thermo-accumulator unit 4 is also provided quadrangular-shaped, while when the thermo-vector units 2 are provided circular-shaped even the thermo-accumulator unit 4 is also provided circular-shaped.

Thus, the thermo-vector units of figures 4 and 5 take the same designation adopted for the thermo-vector units 2, i.e. they are indicated by references 4S when provided as a prism with quadrangular base coupled to a quadrangular-shaped thermo-vector unit 2S, and 4C when providedd as a cylinder coupled to a circular-shaped thermo-vector unit 2S.

In case of thermo-vector unit 4S, the jackets 18 take the shape of quadrangular-shaped tubular elements coaxially arranged in the outermost jacket.

As observable in figures 4 and 5, just like in figure 1, two thermo-vector units 2S/2C are arranged at opposite ends of a thermo-accumulator unit 4S/4C, so as to provide substantially two heads of the thermo-accumulator unit 4S/4C. Supposing - purely by way of non-exhaustive example - a vertical implementation like the one illustrated in figures 4 and 5, the lower thermo-vector unit 2S, 2C is probably intended to convey a thermovector fluidthermo-vector fluid at low temperature (or - as observable hereinafter - a cold/discharge fluid), while the upper thermo-vector unit 2 is intended to convey a thermovector fluidthermo-vector fluid at high temperature (hot/charge fluid).

For the sake of simplicity, the numerical references associated to areas or components of the system that manage the cold/discharge fluid, are enriched by a symbol "*", while the numerical references associated to areas or components of the system that manage a hot/charge fluid are enriched by a symbol "!". Thus, the serpentine flow ducts take references 6! and 6*.

Given that the two ends of each coil 6!/6* can independently form an inlet and an outlet for an working fluid, the storage devices 1 are naturally and simply suitable to form an array of devices hydraulically connected to each other.

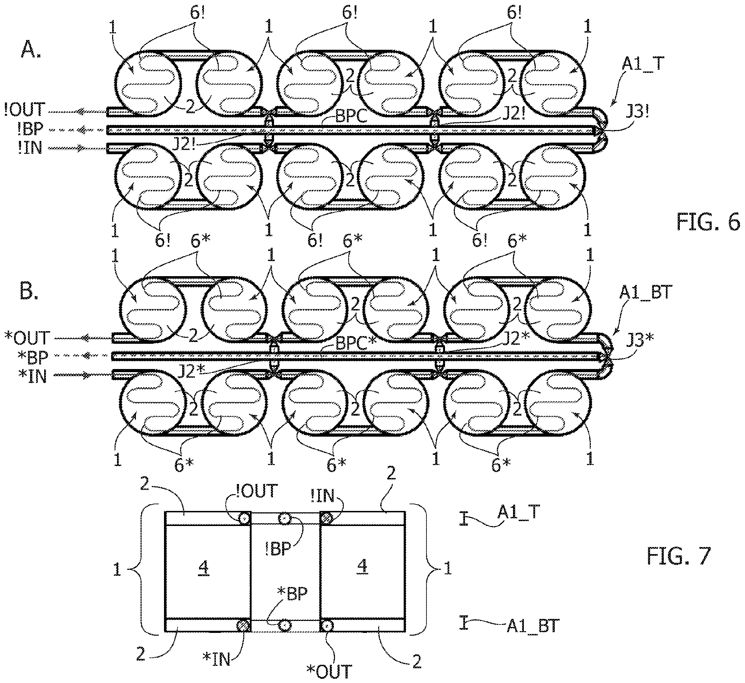

In the embodiment of figure 6 there are provided for - purely by way of example - twelve storage devices 1 connected to each other in hydraulic series with a U-shaped arrangement, so that they are two arrays of six parallel devices 1 from a geometric point of view. Due to the arrangement of the thermo-vector units 2 on opposite sides of the thermo-accumulator units 4, within the array of devices 1 there can be identified an upper array A1_T of thermo-vector units 2, and a lower array A1_B of thermo-vector units 2. Each array shares the general arrangement of the units 1.

With reference to the array A1_T, intended for the circulation of the hot/charge working fluid, a bypass duct BPC! extends manifold like between the two arrays of six thermo-vector units 2 (and just like the six storage devices), and to this end it has three circuit nodes J1!, J2!, J3! leading into which are branching ducts departing from the further hydraulic nodes located on opposite sides with respect to the channel BPC! and arranged hydraulically between pairs of devices 1 arranged adjacent and in series along the same array. At the circuit nodes J1!, J2!, J3!, just like the further hydraulic nodes from which the branching ducts depart, there are arranged flow regulation valves (preferably automated, for example by means of providing the moveable equipment with drive means or by means of pneumatic actuation) switchable between an open position and a closed position and - in some embodiments - capable of being split in opening.

With reference to the array A1_B, intended for the circulation of the cold/discharge working fluid, a bypass duct BPC* extends manifold like between the two arrays of six thermo-vector units 2 (and just like the six storage devices) and to this end it has three circuit nodes J1*, J2*, J3* leading into which are branching ducts departing from the further hydraulic nodes located on opposite sides with respect to the channel BPC! and arranged hydraulically between pairs of devices 1 arranged adjacent and in series along the same array. At the circuit nodes J1*, J2*, J3*, just like the further hydraulic nodes from which the branching ducts depart, there are arranged flow regulation valves (preferably automated, for example by means of providing the moveable equipment with drive means or by means of pneumatic actuation) switchable between an open position and a closed position and - in some embodiments - capable of being split in opening.

Globally, as concerns the charge fluid, the array A1_T includes three operating ports, in particular:

- an inlet port for a high temperature working fluid !IN, an outlet port for high temperature working fluid (cooled) !OUT and an outlet port of the bypass duct BPC! indicated with reference !BP.

As regards the discharge fluid, the array A1_B similarly includes three operating ports, in particular:

- an inlet port for a low temperature working fluid *IN, an outlet port for low temperature working fluid (heated) *OUT and an outlet port of the bypass duct BPC* indicated with reference *BP.

The flow path for the working fluid when all units 1 are active, corresponds to the sum of the sections 6! For the hot fluid, and 6* for the cold fluid.

The global arrangement of the inlet and outlet ports of the working fluid is schematically illustrated in figure 7.

The storage device 1 operates as follows. The description shall apply both considering the device 1 independently and considering the device 1 operating in an array.

The storage device 1 operates as a thermal cell which is charged and discharged by means of thermo-vector units 2. The element that is materially subject of energy charge and discharge is the thermo-accumulator unit 4.

In particular, the thermo-vector units 2 in which a high temperature working fluid (if arranged like in figure 6 is a thermo-vector unit of the array A1_T) flows, provides the charging of the thermo-accumulator unit 4 and the storage of thermal energy in the system due to the thermal exchange between the working fluid which flows in the thermo-vector unit and the storage material which occupies the thermo-accumulator unit 4.

When the working fluid flows in the flow duct 6 of the thermo-vector unit 2, only the flow duct is configured to bear the pressure of the working fluid, while the matrix 8 is not required to perform any structural function, given that it has the sole function of conveying the thermal flow towards the thermal storage material in the thermo-accumulator unit 4, whose material is at contact with the matrix 8.

To this end, the jackets 18 of the thermo-vector unit 4 serve as heat conductor fins so as to maximise the transfer of energy from the matrix 8 to the thermal storage material.

When the thermo-accumulator unit is fully "charged", i.e. upon reaching the maximum charge temperature possible as a function of the temperature of the working fluid (i.e. substantially the thermal balance between the working fluid and the temperature of the thermal storage material in the thermo-accumulator unit 4), the storage device 1 is maintained in the charged conditions due to the insulation that covers it externally (not illustrated in the figures for the sake of simplicity), thus preventing loss of thermal energy towards the external upon completing the charge process.

Possibly, the charge may also be maintained by circulating a minimum flow rate of the high temperature working fluid to restore any energy losses.

When using the thermal energy stored in the thermo-accumulator unit 4, it is sufficient to introduce the low temperature working fluid into the thermo-vector unit 2 at the opposite end with respect to the unit 2 associated to the hot working fluid (it is a thermo-vector unit of the array A1_B if arranged according to figure 6).

In this case, the working fluid flowing in the flow duct 6* exchanges heat through the matrix 8 with the thermal storage material in the thermo-accumulator unit 4, so that the fluid flowing out from the thermo-vector unit 2 (port *OUT) has a higher temperature with respect to the inlet one (on the port *IN).

It should be observed that, given that the static storage of thermal energy is provided by solid material, the device 1 is free of back-mixing phenomena which affect fluid thermal storage devices, and it is thus capable of maintaining - for a more extended time interval and without substantial internal loss - a desired flow rate of the working fluid (discharge) through the thermo-vector unit 2 at a desired temperature, thus allowing to meet the demands of several appliances and/or various applications that receive the fluid heated by the energy stored in the device 1.

The unit 1 is totally insulated externally and thus thermally insulated from the surrounding environment and it is capable of charging and/or discharging even in several different and separate time sessions: if the device 1 is installed in series, for example, to a solar concentrator in which the working fluid is diathermic oil or heated vapour, then the charging step is suspended in the absence of solar radiation, with the simultaneous stop of circulation of the working fluid. The stored energy is maintained in the thermo-accumulator unit 4 until solar radiation is available again, thus allowing to resume charging. An efficient insulation can allow to limit the thermal dispersions and maintain the storage temperatures even for several days. When the system is totally or - still - sufficiently charged for the user's needs, it is possible to circulate the operating (discharge) fluid to be heated, regarding which, upon proper dimensioning of the entire system, it is possible to guarantee the dispensing of a constant flow rate at a constant temperature without prejudice to the possibility of circulating the working fluid (discharge fluid) even during the charge step, with ensuing increase of the time required to charge the storage system.

Should the groups of devices 1 be connected in an array as illustrated in figures 6A, 6B, acting on the valves which terminate at the hydraulic ends of the system enables varying the amount of energy stored in the array and the charge and discharge pattern of the array of devices 1, simply by providing the various connections allowed by the valves on the hydraulic nodes when required.

Generally speaking, the high temperature working fluid (charge fluid) during the charge process flows in through the inlet !IN of the array A1_T and flows through a series of flow ducts 6! whose extension is defined by the opening and closing pattern of the flow regulation valves. Discharging part of the hot fluid rate into the duct BPC! whenever required also allows reducing the charge processes. In any case, except for the working fluid which is discharged through the bypass duct BPC!, the remaining amount of cooled high temperature working fluid flows out from the outlet port !OUT.

Still generally speaking, the low temperature working fluid (discharge fluid) during the discharge process flows in through the inlet *IN of the array A1_B and flows through a series of flow ducts 6* whose extension is defined by the opening and closing pattern of the flow regulation valves (generally separate and independent from that of the valves of the array A1_B). Discharge of part of the hot fluid flow rate into the duct BPC* whenever required, also allows reducing the discharge processes of the system, for example should there be a surplus flow rate with respect to the temporary needs of the user or for preventing the thermochemical degradation (irreversible) phenomena regarding the discharge thermovector fluidthermo-vector fluid upon exceeding the maximum temperature admissible by the thermovector fluidthermo-vector fluid (wall and bulk limit temperatures). In any case, except for the working fluid which is discharged through the bypass duct BPC*, the remaining amount of cooled high temperature working fluid flows out from the outlet port *OUT.

According to an advantageous aspect of the invention, the valves on the hydraulic nodes of the system allow excluding one or more storage devices 1 so as to use, for example in the discharge step, only some of the consecutive devices 1 (arranged immediately adjacent and hydraulically in series) and strictly required to bring the discharge working fluid to the desired temperature without the risk of overheating, or exceeding the wall temperature thereof.

This solution also opens up to the possibility of using two different working fluids for the charge and discharge step, respectively. By way of example, one can use high pressure water vapour (produced, for example, in a solar concentrator) in the charge step, so as to reach higher storage temperatures and/or charge the thermo-accumulator unit 4 within shorter times, and a diathermic oil in the discharge step, which - being affected by the limits in terms of maximum admissible bulk and wall temperatures - must bypass the subsequent devices 1 possibly still charged upon reaching a limit temperature.

As soon as the devices 1 affected by the through-flow of the diathermic oil in the discharge step are insufficiently charged to guarantee the desired temperature for the discharge fluid, action is taken on the valves by activating - in succession - one or more additional module devices 1 (which had been charged and bypassed up to that point) so as to ensure constant service discharge fluid flow rate and temperature, i.e. constant power to the user.

The bypass systems (valve units on circuit nodes) of the two arrays A1_T and A1_B for the hot and cold fluids (charge and discharge lines, respectively) are totally independent so as to have an exceptional flexibility of use, with the possibility of simultaneous flow of the two fluids, even in different parts of the circuit, and thus perform the two charge and discharge steps simultaneously.

When both the hot/charge fluid and the cold/discharge fluid flow simultaneously in the system, or when only one of the two circulates, each of the thermo-accumulator units 4 (this applies to thermo-vector units 2 too) behaves, for thermal exchange purposes, like an insulated section of a heat exchanger separated - by means of thermal interruptions - from the adjacent sections, similarly to what is described in the patent application number 102016000009566 dated 29 January 2016. The thermal interruptions are arranged transverse to the flow direction of the working fluid, whether hot or cold.

As a matter of fact, the thermal interruptions, which are obviously provided between subsequent thermo-accumulator units connected in series, allow to physically segregate - in space - thermal storage material portions susceptible to generally have a temperature even very different from each other.

Were that not the case, the thermal gradient between two subsequent thermo-accumulator units 4 would create a heat flow in the storage material which would extend by conduction along the longitudinal direction of the system, i.e. along the flow direction of the thermovector fluidthermo-vector fluid. This would - in sufficiently long times - level and homogenise the temperature, thus causing a degradation of the stored heat, or a loss of "quality" of the heat, which would become less "valuable" and more scarcely usable (due to the increase of entropy by mixing).

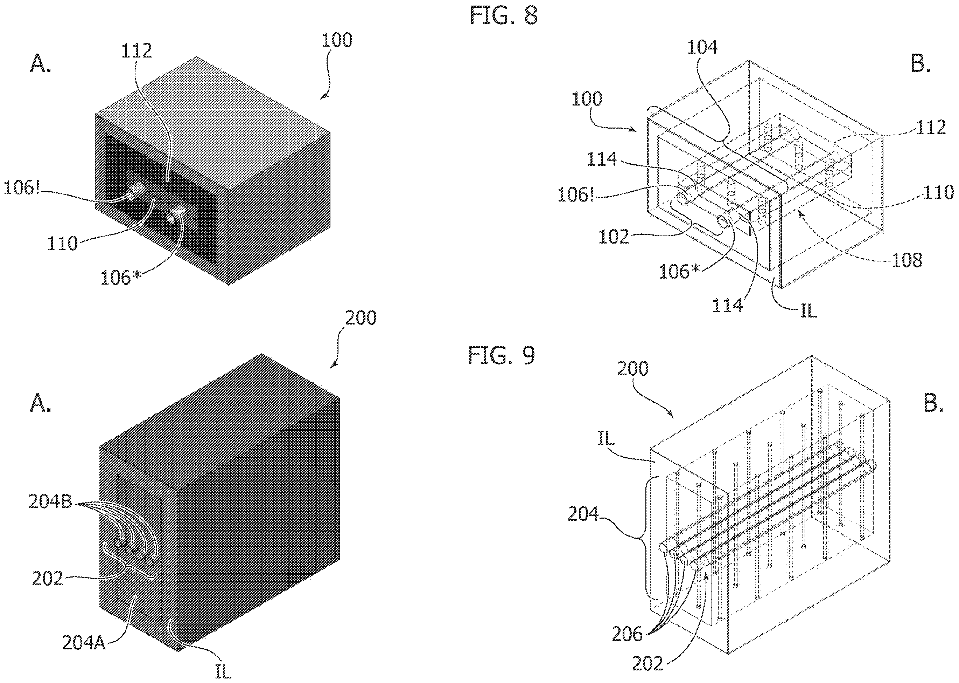

Figure 8 and figure 9 illustrate two further embodiments of a storage device for thermal energy according to the invention,
With reference to figure 8A and figure 8B, the reference number 100 designates a second embodiment of the storage device for thermal energy according to the invention.

The device 100, includes a thermo-vector unit 102 and a thermo-accumulator unit 104. The thermo-vector unit 102 includes a first and a second flow duct 106! and 106* for an working fluid respectively at high and low temperature which are both housed in a matrix 108 provided for closing - in a pack-like fashion - on the ducts 106*, 106! of a first and a second plate 110, 112.

The plates 110, 112 bear axial grooves 114 which, when matched during the pack-like closure, provide circular sections for the insertion of the ducts 106! and 106*. Contrary to the device 1 - wherein contact with the thermo-accumulator unit occurs only on one face of the thermo-vector unit 4, the device 100 provides that the thermo-vector unit 102 be embedded in the thermo-accumulator unit 104, in particular the entire thermo-vector unit 102 is surrounded by the solid thermal storage material of the thermo-vector unit 104.

The whole of the above is also enclosed in a thermal insulating casing IL which allows preventing substantial thermal dispersion towards the external, acting as a passive thermal charge preserver.

With reference to figures 9A and 9B, reference number 200 designates a storage unit for thermal energy according to a third embodiment of the invention.

The distinctive feature of the device 200 lies in the purely functional segregation between the thermo-vector unit and the thermo-accumulator unit, given that - in this case - the thermo-accumulator unit forms the matrix of the thermo-vector unit.

Regarding this, the storage device for thermal energy 200 includes a thermo-vector unit 202 comprising a plurality of flow ducts 206 which are embedded in a matrix 204 forming the thermo-accumulator unit. The matrix 204 includes a first and a second half-matrix 204A, 204B made of preferably solid thermal storage material with coherent (i.e. non-granular) structure, which is processed by providing grooves capable of accommodating the flow ducts 206. The whole of the above is enclosed by a thermal insulating casing IL similar to the casing IL of the device 100. The flow ducts 206 can be intended - according to an association that can vary as a function of the needs - for hot fluid and cold fluid.

Regardless of the geometric implementation of the thermo-accumulator unit, in order to be able to guarantee the final user a constant discharge thermovector fluidthermo-vector fluid temperature (as long as it is lower or at most equal to the maximum operating temperature of the storage cycle), similarly to what is described in the patent application n° 102016000009566 dated 29 January 2016, it provides thermal interruptions even in the thermo-accumulator unit, for canceling or at least limiting the heat flow along the main direction of flow of the thermovector fluid. The need for this provision increases proportionally to the increase of conductivity of the storage material used, depending on the extension of the thermo-accumulator unit along the direction of flow of the thermovector fluid. Furthermore, this provision is required in cases wherein the thermal storage material is of the liquid type, and even more if the liquid is undergoing phase change (boiling liquid). As a matter of fact, being a liquid susceptible to have natural convection motions which amplify the thermal exchange efficiency , and even more so if the liquid is boiling (high coefficients of thermal exchange), the thermal level of even extensively vast regions of the storage array would become uniform, reducing over time, with respect to what would be witnessed in would occur if the regions that can be at a different temperature were to maintain such condition due to the spatial segregation provided using the aforementioned thermal interruptions.

Thus, as concerns all embodiments of the storage device according to the invention in which there is only functional segregation between the thermo-vector unit and the thermo-accumulator unit, the arrangement - in the thermo-accumulator unit (i.e. in the storage material) - of thermal interruptions transverse to the flow direction of the working fluid is ranked, in terms of importance towards providing the technical objectives of the present invention, immediately after the thermal diffusivity interval indicated above. The provision of thermal interruptions is neither strictly necessary in a single thermo-accumulator unit 104, 204 nor practical in case of the thermo-accumulator unit 4 which is even physically segregated with respect to the thermo-vector unit 2, but it is in any case practically provided when connecting the various units 1, 100, 200 as an array, and - if provided in units 104, 204 - it allows to boost the performance of the respective storage device as indicated above. Thus, a storage device for thermal energy according to the invention having a storage material capable of meeting the thermal diffusivity requirements and which preferably also has thermal interruptions (required in case of thermal storage material of the fluid type) amplifies the results and advantages of the invention.

Even more preferably, applying to all embodiments described previously and those subject of the description that follows, the advantages of the present invention are further amplified if the thermo-accumulator unit also meets requirements regarding the FOMs corresponding to $\tau_{spec}$, and even more preferably to $\sigma_\tau$.

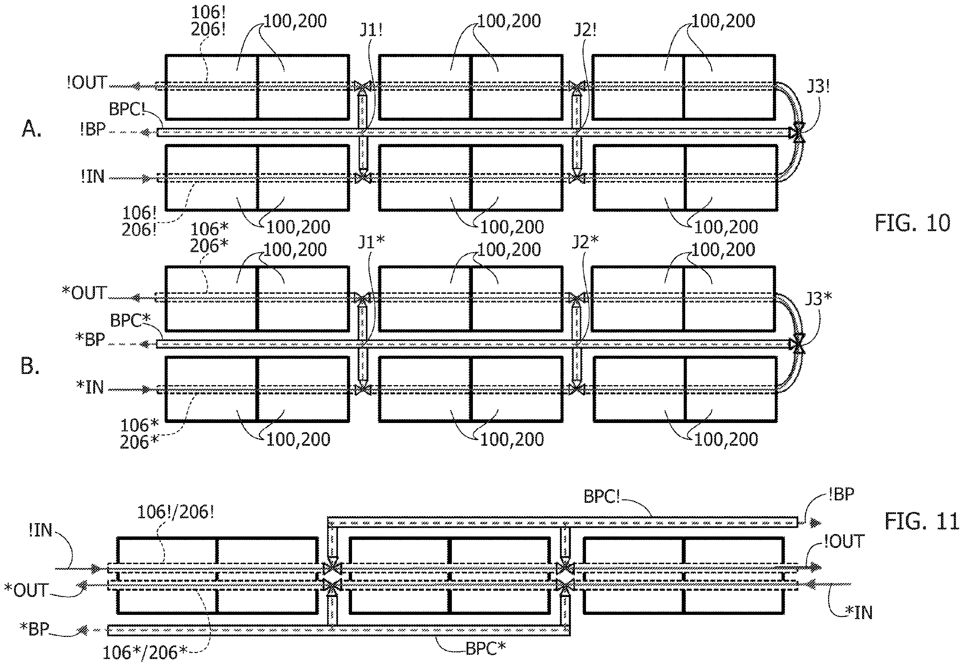

With reference to figure 10 and figure 11, the storage devices for thermal energy 100 e 200 are suitable for connection as an array similarly to the storage devices for thermal energy 1. The top (figure 10A) and bottom (figure 10B) plan views are illustrated in figure 10. Contrary to the arrays of devices 1, in the arrays of devices 100, 200 there may not be provided two heads within which high temperature and low temperature working fluids flow respectively (as the arrays A1_T and A1_B instead are), given that the devices 100, 200 include a single thermo-vector unit. Thus, in this case, the flow ducts thereof are partly intended for the circulation of high temperature (charge) working fluid, partly intended for the circulation of low temperature (discharge) working fluid.

In the exemplary embodiment of the array of devices 100, 200 illustrated herein, the flow ducts are - for the sake of illustration simplicity - two, one (106!, 206!) intended for the circulation of high temperature working fluid (figure 10A), the other (106*, 206*) intended for the circulation of low temperature working fluid.

The hydraulic connection methods are identical to those described for the array of devices 1, without prejudice to the fact that the circuits for the hot fluid and cold fluid are concentrated in the same matrix.

As a matter of fact, there are provided - by way of example - twelve storage devices 100, 200 in which there are provided two separate circuits (hot/cold) each providing a hydraulic series connection with a U-shaped arrangement so that - from a geometric point of view - they are two parallel arrays of devices 100, 200.

Concerning the hot/charge fluid, a bypass duct BPC! extends manifold-like between the two arrays of six storage devices and - to this end - it has three circuit nodes J1!, J2!, J3! leading into which are branching ducts departing from the further hydraulic nodes located on opposite sides with respect to the channel BPC! and arranged hydraulically between pairs of devices 100, 200 arranged adjacent and in series along the same array.

Concerning the cold/discharge working fluid, a bypass duct BPC* extends manifold-like between the two arrays of six storage devices and - to this end - it has three circuit nodes J1*, J2*, J3* leading into which are branching ducts departing from the further hydraulic nodes located on opposite sides with respect to the channel BPC* and arranged hydraulically between pairs of devices 100, 200 arranged adjacent and in series along the same array.

Globally, concerning the charge fluid, the array of devices 100, 200 includes three operating ports, in particular:

- an inlet port for a high temperature working fluid !IN, an outlet port for high temperature working fluid (cooled) !OUT and an outlet port of the bypass duct BPC! indicated with reference !BP.

As regards the discharge fluid, the array of devices 100, 200 includes three operating ports, in particular:

- an inlet port for a low temperature working fluid *IN, an outlet port for low temperature working fluid (heated) *OUT and an outlet port of the bypass duct BPC* indicated with reference *BP.

As can be noted from the view of figure 11, the arrangement of the flow ducts intended for the circulation of the high and low temperature working fluids is substantially horizontal (coplanar). However, in alternative embodiments like the one visible in figure 11, the flow ducts and the bypass ducts BPC! and BPC* can for example be arranged on opposite sides of the array, with discharge ends opposite thereto.

The storage devices 100, 200 operate substantially identically to the devices 1, except for the fact that the charge and discharge fluids flow (separately or simultaneously), as a function of the needs. The action on the valves which are arranged at the hydraulic nodes J1!, J2!, J3! and the relative branching nodes allow to provide different flow paths and charge/discharge patterns of the array of storage devices for thermal energy 100, 200. The extension and development of the flow path can be established based on criteria identical to those described above as concerns the array of devices 1.

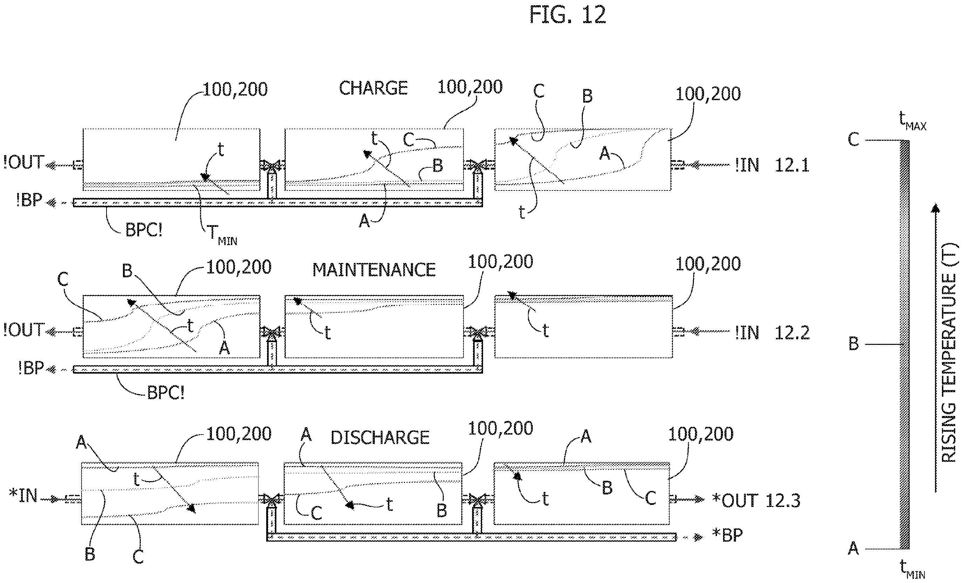

Figure 12 illustrates - in portions 12.1, 12.2, 12.3 - three qualitative examples of thermal profiles of an array of devices 100, 200 during the charge (figure 12.1), maintenance (figure 12.2), and discharge (figure 12.3) operations. Each of the diagram representations of figure 12 illustrates three isochrone curves A, B, C, associated to three subsequent general time instants (the representation shall be deemed purely for qualitative purposes). The isochrone curves coexist in the diagrams essentially due to the fact that they underlie a time development parameter t, whose increase direction is indicated in figures (A < B < C). Each of the curves illustrated in the shapes of the single modules 100, 200, represents the quality trend of the temperature of the solid storage device with respect to the position in the module along the horizontal axis (the temperature shall be deemed as the average on the surface orthogonal to the horizontal axis). In other words, in each of the rectangular shapes 100, 200 there shall be deemed superimposed a system of cartesian axes T-x in which the temperature T grows upwards, as indicated in the key to the right in the figure.

During the charge step - figure 12.1 - the high temperature working fluid which impinges the array through the port !IN transfers thermal energy to the storage material of each of the thermo-accumulator units of the devices 100, 200 (directly in the latter case, without the thermal flow passing through any further matrix), which increase the respective temperatures as a function of the amount of energy received. In particular, it can be observed that the charge of the first device 100, 200 that the hot fluid flow flowing into the system encounters on the path thereof is quite fast, and that - at the end of the observation frame - almost the entire volume of storage material in the thermo-accumulator unit 104, 204 rose to the charge temperature $T_{MAX}$ (maximum temperature of the operating cycle). In the case of the second device 100, 200, the temperature of the system evolves more slowly, given that the working fluid has already lost an amount of energy in the interaction with the first device 100, 200 of the array. At the end of the observation frame, approximately 40% of the storage material in the thermo-accumulator unit 104, 204 will have a reached the charge temperature $T_{MAX}$. At the end of the observation time frame, the last device 100, 200 on the working fluid path is substantially still in conditions of substantial discharge, given that by now the working fluid will have lost most of its thermal energy in the interaction with the storage devices previously encountered along the path.

Extending the interaction between the hot working fluid and the array of the storage devices for thermal energy 100, 200 beyond the limits of the observation frame taken into account for figure 12.1, a condition is achieved wherein the charge temperature is in almost the entire volume of the storage material in the thermo-accumulator units 104, 204, with the sole exception - in any case depending on the amount of time used for charging - possibly lying in the last device 100, 200 with respect to the flow path of the hot working fluid. The charge of devices 100, 200 can be maintained in a completely passive manner for brief periods thanks to the provision of the thermal insulating state IL, and for long periods of time (figure 12.2) it can be maintained by circulating a maintenance hot fluid flow rate (lower than the charge flow rate). It should be observed that under given conditions and for a given period of time it is possible to guarantee a constant flow rate of the thermovector fluid to the user at the temperature (maximum) required even under partial charge conditions of the entire storage volume, as long as there remains at least one module (or fraction thereof) of the array of modules at an average temperature greater than the one required by the user.

Lastly, the subsequent figure 12.3 illustrates the discharge step of the array of storage devices 100, 200. The cold fluid flow that impinges the array through the port *IN reduces - in a relatively quick manner - the temperature of the storage material in the first device 100, 200 with which the fluid interacts along the flow path. At the end of the observation frame subject of figure 12.3, almost the entire thermal energy stored in the first storage device was transferred to the cold working fluid, which thus increased the temperature thereof. This reflects in the thermal interaction with the subsequent storage devices for thermal energy: the second device, with which the working fluid interacts already at a higher temperature with respect to the system inflow temperature, transfers a lower amount of thermal energy remaining for a substantial part (more than 60% approximately) still at the charge temperature. The phenomenon is further amplified in the last device 100, 200 of the array, which remains charged in an almost integral manner, given that the fluid has already been heated at an even higher temperature (as a function of the user's demand).

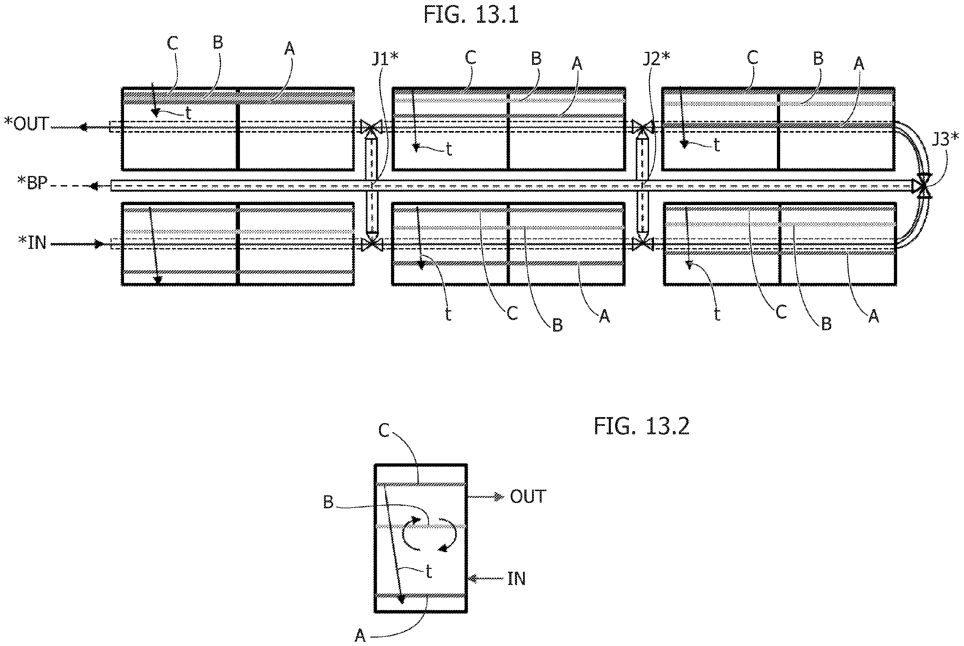

The subsequent figures 13.1 and 13.2 once again illustrate the discharge steps of storage devices for thermal energy, but while figure 13.1 illustrates a array of devices according to the invention (the connection methods are those of figure 10), figure 13.2 illustrates three iso-temperature profiles A, B, C parametrised with respect to the time evolution with reference to a conventional oil or molten salts thermal storage device (IN and OUT are the working fluid inlet and outlet ports).

The difference in operative terms and efficiency is clear: in an array of thermal storage devices according to the invention, the discharge process is extremely uniform and the working fluid can be thermally conditioned with high efficiency even considering high flow rate demand thereof by the user. Furthermore, the connection in series and/or parallel of the storage devices 1, 100, 200 according to the invention substantially provides a system of concentrated thermal exchanges due to the fact that the subsequent thermo-vector units are separated from each other by a thermal interruption corresponding to the inter-device section (between two subsequent devices). This strongly limits, if not entirely cancels, parasitic thermal exchanges in the axial direction (in particular between adjacent thermo-accumulator units), concentrating thermal exchanges in the direction transverse to the flow, maximising the efficiency thereof.

Once again, when both the hot/charge fluid and the cold/discharge fluid flow simultaneously in the system, or when only one of the two circulates, each of the thermo-vector units 102, 202 behaves, for thermal exchange purposes, like an insulated section of a heat exchanger separated by means of thermal interruptions from the adjacent sections, similarly to what is described in the patent application number 102016000009566 dated 29 January 2016.

As a matter of fact, the thermal interruptions which are obviously provided between a storage device for thermal energy 100, 200 and the subsequent one allow to physically segregate - in the spaces - thermal storage material portions susceptible to generally have temperatures that could even be very different from each other.

Were that not the case, the thermal gradient between two subsequent thermo-accumulator units 4 would create a heat flow in the storage material which extends by conduction along the longitudinal direction of the system.. This would, in sufficiently long times, level and homogenise the temperature, thus causing a degradation of the stored heat, or a loss of "quality" of the heat, which would become less "valuable" and more scarcely usable.

As previously partly discussed, it is this particular solution - extending the observation to the devices 1 arranged as an array too - that allows, irrespective of the average residual charge of the entire array of modules 1, 100, 200, as long as there is a fully charged region of the array - whatever the extension - (i.e. at the maximum design charge temperature TMAX) it is possible to guarantee the constancy of the output temperature of the user fluid, same case applying for the flow rate thereof (within a given operating interval).

The dispensing of a constant flow rate at a constant temperature, both specified by the end user, becomes more durable over time due to (in combination, or the second point only at most):

- providing the single storage module 100, 200 with internal thermal interruptions, and
- the method of assembly of consecutive storage modules 1, 100, 200 (physically thermally separated using the same connection conduits) to form a thermal storage cell.

The constancy of the temperature and the flow rate dispensed to the user can be guaranteed for a period of duration that extends depending on how low the temperature is and/or the flow rate required by the user. Should the operating temperature required by the user be lower than the maximum storage temperature, both specifications are provided by sending only one predetermined portion of the working fluid flow rate in the storage system. This will heat up to the maximum available temperature instant by instant (depending on the residual charge of the single modules that form the thermal cell), and it will be mixed with a predetermined thermo-vector fluid flow rate sent to the bypass conduits instead. As time progresses, the bypass flow rate is progressively reduced while the flow rate sent to the module is increased progressively, so that the resulting cumulative flow rate sent to the user is always constant, same case applying to the temperature thereof.

On the contrary, should the operating temperature required by the user be equal to the maximum storage temperature, the constant temperature and flow rate specifications of the user can be maintained only due to the thermal interruptions and for a very short period of time, i.e. as long as there is at least one storage element having a temperature equal to the maximum.

The thermal cell will be totally discharged (to meet the user's requests) when the bypass flow rate becomes null: at that instant, the temperature and flow rate of the fluid flowing out from the thermo-vector unit are exactly those required by the user and, if the flow rate is still maintained constant, the temperature to the appliance will inevitably drop below the specification.

The system thus conceived operates perfectly similarly to a common rechargeable electric cell, which is capable of dispensing a constant current and a constant voltage, until sufficiently charged.

On the contrary, in conventional thermal storage devices using fluids such as oil or molten salts (figure 13.2), the transfer of heat into the thermal storage material is superimposed to the transfer of the main heat between the working fluid and the thermal storage material, as parasitic effect, due to the back-mixing phenomenon schematically represented by the pair of circuiting arrows in figure 13B. Thus, a considerable amount of thermal flow, which could otherwise be transferred to the working fluid, is irremediably dissipated inside the system through convective thermal exchange between portions of fluid volume at different temperatures that come into contact with each other.

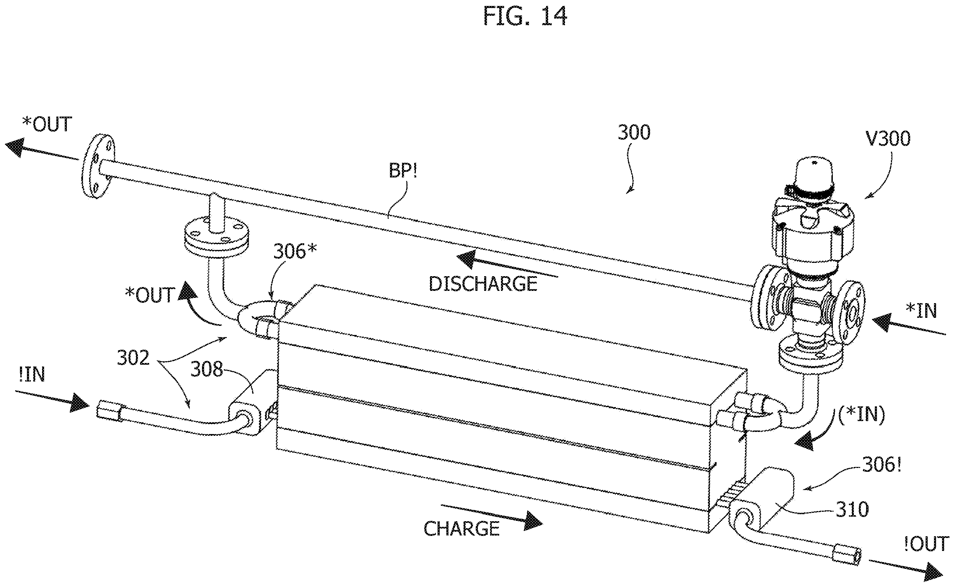

With reference to the subsequent figures 14 to 18, following is a description of a further embodiment of a storage device for thermal energy - indicated by the reference number 300 - according to the invention.

The device 300 is still of the type wherein the segregation between the thermo-vector unit and the thermo-accumulator unit is only functional, the former being embedded in the latter, but it is characterised in that it has a charge side and a discharge side that are segregated and asymmetric. In particular, the geometry of the charge side is different from that of the discharge side so as to allow the optimised management of two different types of fluids, for the charge and discharge respectively.

The storage device 300 includes a thermo-vector unit 302 embedded in a thermo-accumulator unit 304. The thermo-accumulator unit 304 is a matrix of solid thermal storage material (with coherent or compacted granular structure) within which there are housed a first tube bundle 306! configured for the circulation of the charge fluid (hot fluid, preferably water vapour), and a second tube bundle 306* configured for the circulation of a discharge fluid (cold fluid, preferably diathermic oil).

The first tube bundle 306! includes an array of coplanar and adjacent tubes (six in this embodiment) hydraulically connected to an inlet manifold 308 (port !IN) and an outlet manifold 310 (port !OUT), both provided as a tubular body with an end connection for connecting to the vapour circulation hydraulic system.

The second tube bundle 306* instead includes one or more tubes (two in this embodiment) which - at the inlet port *IN - is connected to a regulation valve V300 (preferably automated, for example by providing the moveable equipment with drive means or by means of pneumatic actuation) with one inlet and two outlets, in which the inlet is configured to receive a flow rate of a cold fluid (diathermic oil); a first outlet functionally provides the port *IN, and a second outlet terminates in a bypass channel (cold) BP*.

At the opposite end, the bypass channel BP! is connected to the outlet *OUT of the tube bundle 306* connecting the two flow paths at a single connection flange.

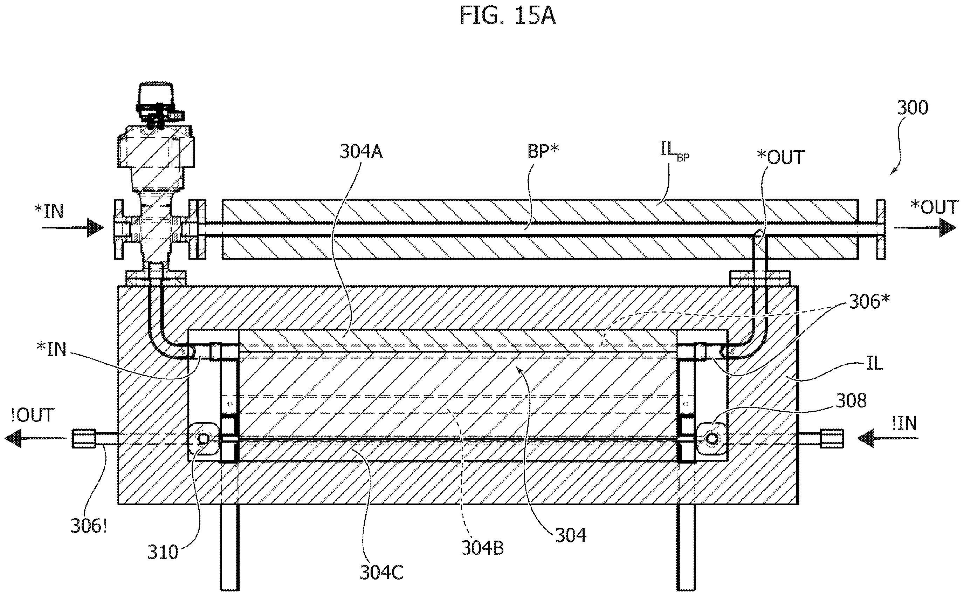

With reference to figure 15A, the thermo-accumulator unit 304 is provided as a matrix made of solid material within which the tube bundles 306! and 306* are embedded, and - furthermore - it is in turn enclosed in a jacket made of insulating material IL, by means of which there is provided the function of passive maintenance of the charge of the system (besides that of limiting thermal energy dispersion towards the external).

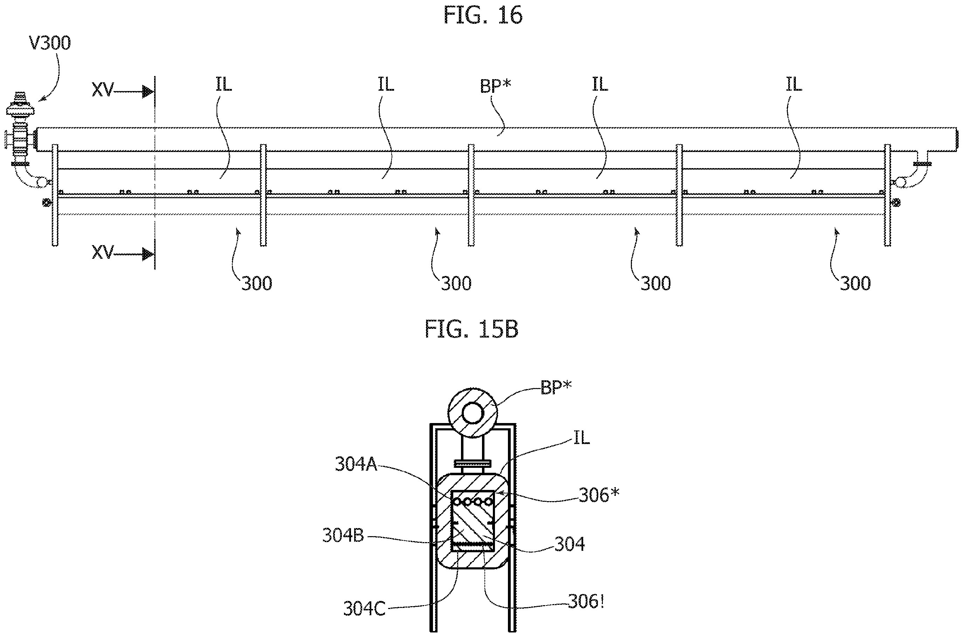

As observable in figure 15A (and furthermore with reference to figure 15B), when the storage material is of the coherent solid type, the matrix substituting the thermo-accumulator unit 304 is conveniently provided in three sections 304A (upper), 304B (intermediate), 304C (lower), wherein the sections 304A and C close the section 304B in a pack-like fashion and define channels for inserting tube bundles 306* and 306! at the respective interfaces with the section 304B.

As regards the view of figure 14 and the section of figure 15A, they correspond to a modular unit of an array of storage devices for thermal energy 300. Regarding this, due to the considerable flexibility of the storage device on which the invention is based, there are even possible two different options for providing an array of devices, in particular:

i) an aggregate of modular units of the type visible in figure 14, 15A, connected in series, in which each modular unit is associated to a respective valve V300 so as to provide for an independent control of the bypass.
ii) an aggregate of the aforementioned modular units connected in series, but with a single valve V300 which depends on the entire series of storage devices, and with a single bypass channel BP* branching with respect to the entire series. This is the case observable in figure 16.

Regarding this, it should be observed that the matrix of the unit 304 is inserted in a jacket made of insulating material IL preferably providing for an interspace at the opposite axial ends of the matrix. Each interspace serves as a thermal interruption which - at the time of assembly of the devices 300 as an array - actually serves as a single thermal cell in which the complex of matrices 304 is equivalent to a single matrix with thermal interruptions provided for by the interspaces.

In terms of features of the thermal storage material of the thermo-accumulator unit 304 and operation, all the observations outlined above shall apply.

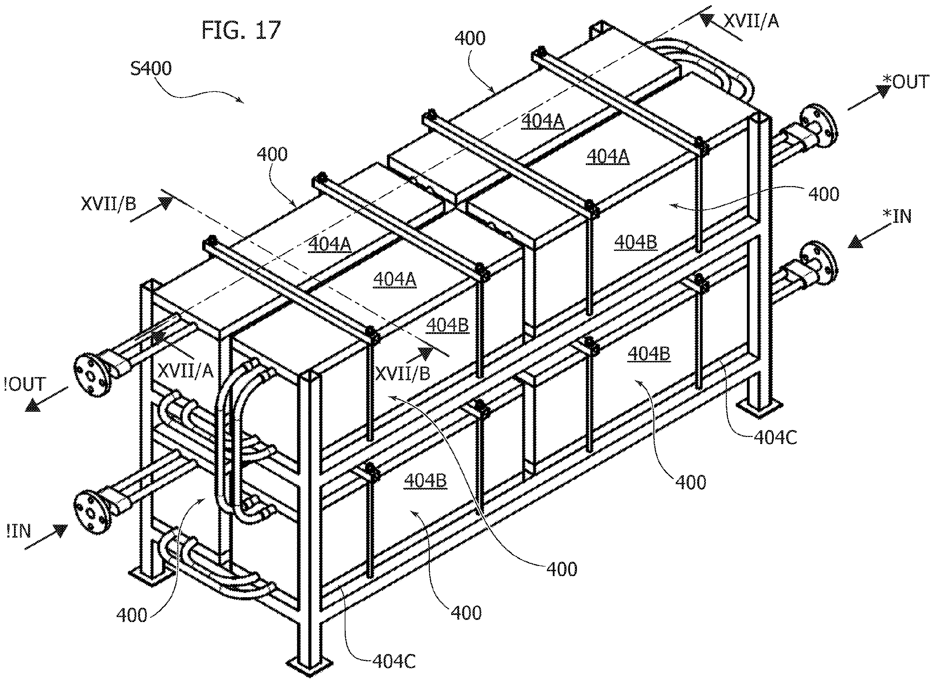

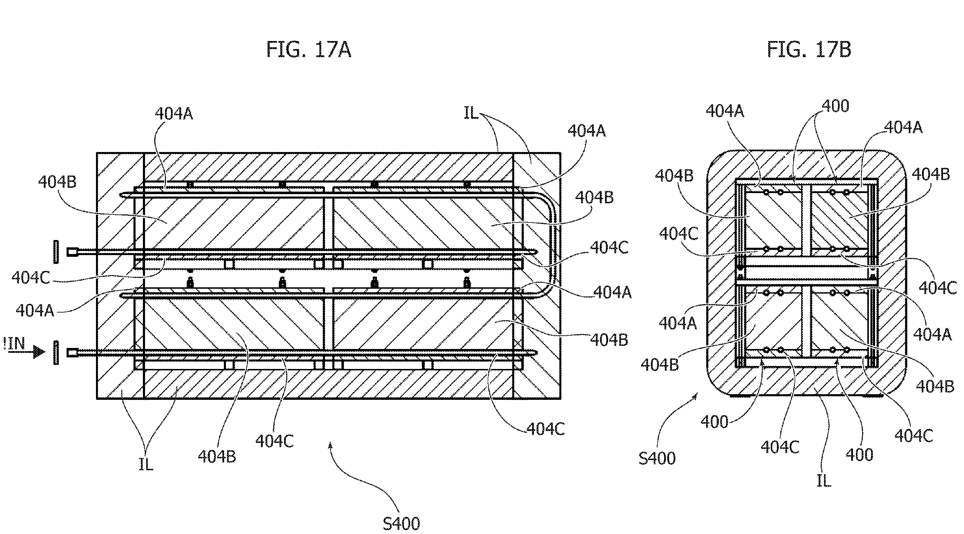

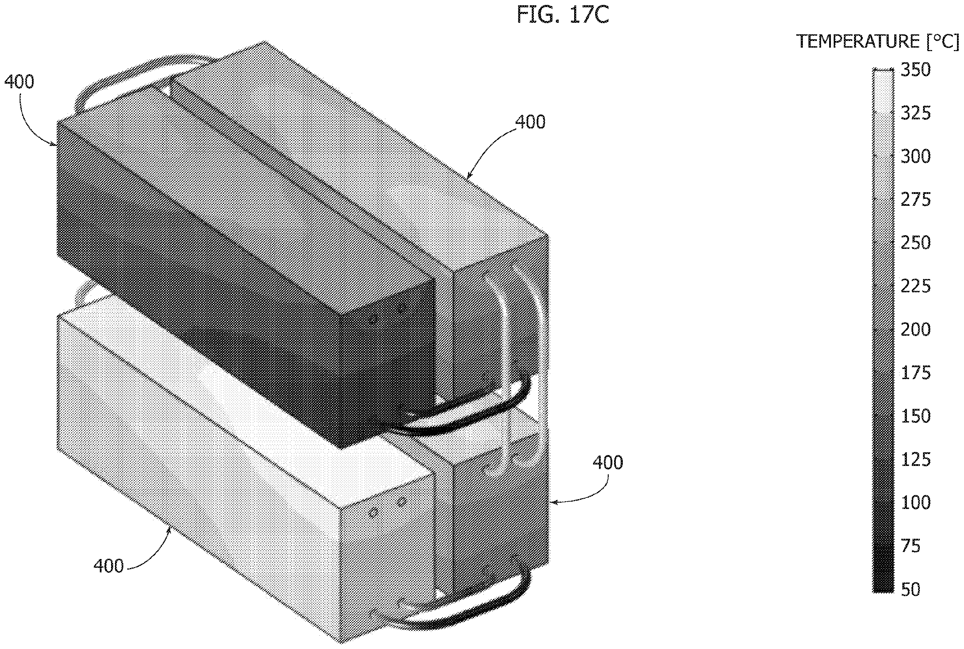

Lastly, with reference to figures 17 to 19, still a further embodiment of a storage device for thermal energy according to the invention is indicated with reference number 400.

The device 400 is once again of the type wherein the segregation between the thermo-vector unit and the thermo-accumulator unit is only functional, the former being embedded in the latter, and it is characterised in that it has a charge side and a discharge side that are segregated and symmetric. In particular, the geometry of the charge side is identical to that of the discharge side, but the respective tube bundles are arranged on opposite sides of the device 400.

The storage device 400 includes a thermo-vector unit 402 embedded in a thermo-accumulator unit 404. The thermo-vector unit 304 is a matrix of solid thermal storage material (with coherent or compacted granular structure) within which there are housed a first tube bundle 406! configured for the circulation of the charge fluid (hot fluid, preferably water vapour), and a second tube bundle 406* configured for the circulation of a discharge fluid (cold fluid, preferably diathermic oil).

The first tube bundle 406! includes a pair of tubes that are parallel, coplanar and adjacent, and same case applying to the second tube bundle 406*, whose two tubes are parallel to each other and parallel to the tubes of the bundle 406!

With reference to figures 17 to 19, the thermo-accumulator unit 404 is provided as a matrix of solid material within which the tube bundles 406! and 406* are embedded. Obviously, the entirety can be covered by a jacket made of thermal insulating material. The figures do not illustrate a thermal insulating coating 400, but rather a jacket IL which wraps an array S400 of four devices 400, by means of which there is provided the function of passive maintenance of the charge of the system besides that of limiting dispersion of thermal energy towards the external).

As observable in figure 17A (and furthermore with reference to figure 17B), when the storage material is of the coherent solid type, the matrix substituting the thermo-accumulator unit 404 is conveniently provided in three sections 404A (upper), 404B (intermediate), 404C (lower), wherein the sections 404A and C close the section 404B in a pack-like fashion and define channels for inserting tube bundles 406* and 406! at the respective interfaces with the section 404B.

When the devices 400 are connected as an array as observable in figures 17A to 17C, the tube bundles 406! and 406* are hydraulically connected by means of substantially U-shaped connection ducts. The path of the charge and discharge circuits respectively coils along the extension of the array due to the conformation of the connection ducts. In the figures, the inlets and outlets of the hot and cold circuits are indicated with references !IN, !OUT and *IN, *OUT respectively (according to the established convention). In this case too, the presence of connection ducts actually provides thermal interruptions in the global thermo-accumulator unit of the array S400, even though this does not rule out the fact that the single thermo-accumulator units 404 can be provided including thermal interruptions in the matrix of each one of them.

In terms of features of the thermal storage material of the thermo-accumulator unit 404 and operation, all the observations proviced above shall apply. Regarding this, figure 17C illustrates a temperature distribution in the array S400 during a general charge transient instant.

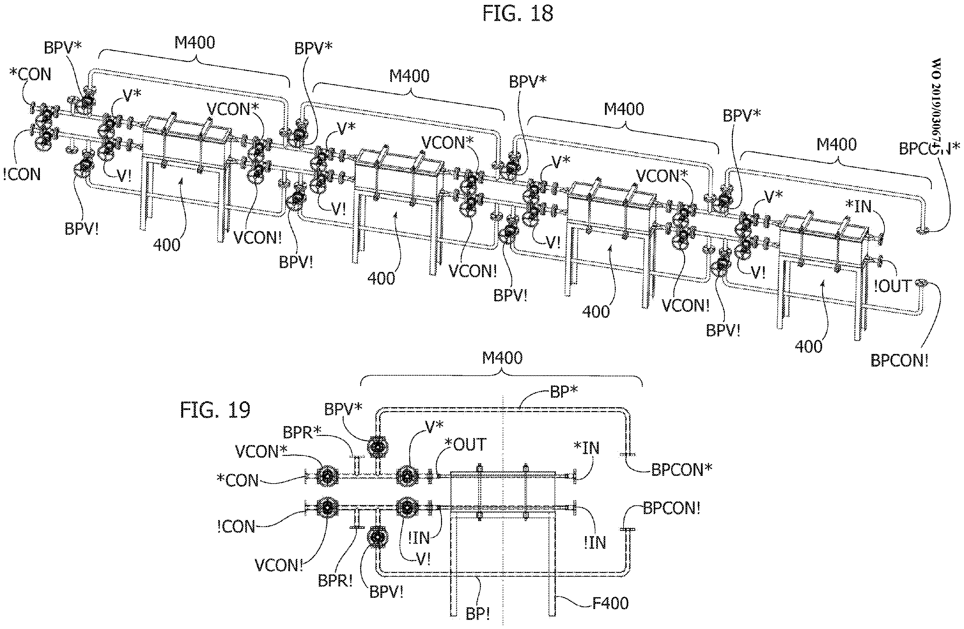

Lastly, with reference to figures 18 and 19, following is another description of a further thermal cell that can be provided by connecting several devices 400 in series. Figure 18 illustrates the complete array, while figure 19 illustrates the modular unit of the array, indicated with reference M400 and from which the description that follows starts.

The unit M400 includes a single storage device for thermal energy 400 preferably enclosed in a jacket made of insulating material and mounted on a support frame F400.

The inlet and outlet ports of the cold and hot circuits (tube bundles 400! and 400*) are indicated with references !IN, !OUT and *IN, *OUT respectively (according to the established convention). The following description is provided by designating the position of the inlets and outlets according to a counter-current operating flow pattern for the hot and cold flows. Obviously, the man skilled in the art can adapt the following description also to various arrangements of the ports, given that the arrangement of the connections follows consequently.

Immediately downstream of the ports *OUT and !IN there are arranged a first and a second shut-off valve V* and V! (preferably automated, for example by providing the moveable equipment with drive means or by means of pneumatic actuation). The term "upstream" is herein used without necessarily referring to the direction of flow of the fluid in the circuit, but by simply taking the core of the figure (i.e. the device 400) as the "downstream" position.

When in open position, the valves V* and V! enable the flow rate to flow through from and towards the device 400. When in closed position, they shut off the through-flow of the flow rate from and towards the device 400.

Still upstream of the valves V* and V! there are arranged a first and a second branching which are connected to the cold (BP*) and hot (BP!) bypass conduits, on which the respective bypass valves BPV* for the cold circuit and the bypass valves BPV! for the hot circuit are fitted (once again, preferably automated, for example by providing the moveable equipment with drive means or by means of pneumatic actuation). The bypass valves BPV* and BPV! regulate the fluid through-flow along the respective bypass ducts, which terminate on the opposite end with a corresponding connection flange BPCON* (cold) and BPCON! (hot).

Still upstream of the first and second branching there are arranged, still in the respective hot or cold side of the system, a first and a second branching connection BPR* (cold), BPR! (hot) which serve as a connection point for the flanges BPCON* (cold) and BPCON! (hot) of the modular unit M400 adjacent in the series when assembling the array.

Lastly, still upstream of the branchings BPR* and BPR! there are arranged a third and a fourth shut-off valve VCON* (cold) and VCON! (hot) - preferably automated, for example by providing the moveable equipment with drive means or by means of pneumatic actuation - upstream of which there are in turn arranged connection ports *CON (cold) and !CON (hot), the latter designated for connection with the ports *IN and !OUT of the modular unit M400 adjacent in the series when assembling the array.

When switched in closed position, the shut-off valves VCON* (cold) and VCON! (hot) allow to completely exclude the unit M400 from the series, including the corresponding bypass ducts BP* and BP! (this not being achievable by the valves V* and V!).

Assembling the series of units M400 according to the connections subject of description, allows providing a thermal cell in which the thermo-vector unit defined by the series of the single thermo-vector units of each device 400 is intervalled by thermal interruptions transverse to the flow direction of the hot/cold working fluid (parallel herein) identically to what has been described above regarding the devices 100, 200, 300, 400, with the same beneficial effects detailed previously.

In conclusion of this disclosure, the following general formalism which allows to establish an analogy between an array of storage devices for thermal energy 100, 200, 300, 400 according to the invention and an electrical circuit, should be taken into account.

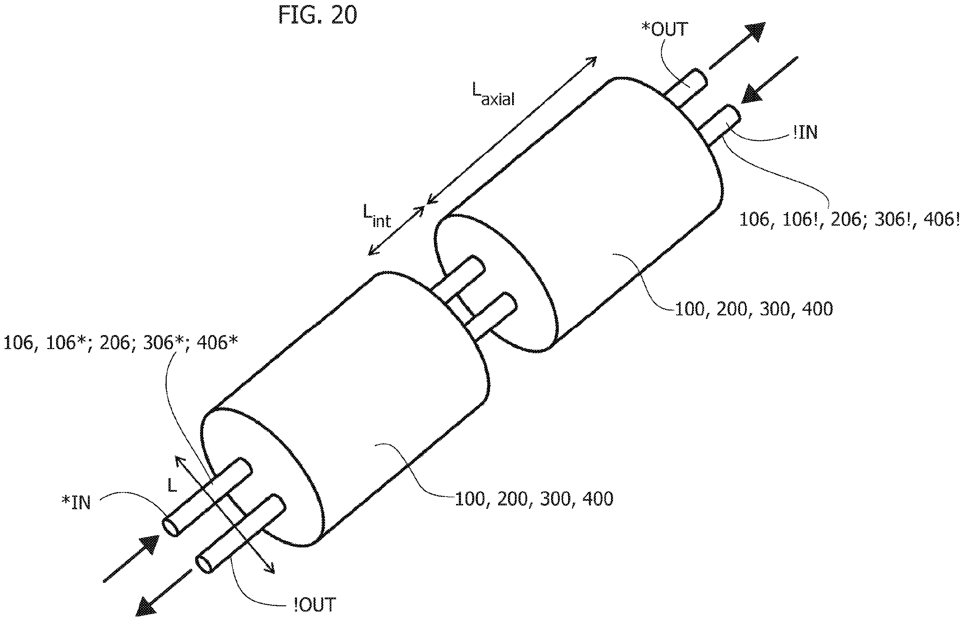

Below, and in combination with the diagram according to figure 20, is a table of correspondence between thermal and electrical quantities on which the analogy is based.

| Thermal | | | Electrical | | |
|---|---|---|---|---|---|
| temperature difference | $\Delta T$ | K | voltage difference | $\Delta V$ | V |
| temperature gradient | grad(T) | K/m | electric field | grad(V) | V/m |
| heat flow | $j_h$ | W/m^2 | charge flow | I | A/m^2 |
| thermal resistance per unit area | r | m·2*K/W | resistance per unit area | Pareal | $\Omega$·m^2 |
| thermal resistance | R | K/W | electrical resistance | R | $\Omega$ |
| thermal conductance | $G_t$ | W/K | electrical conductance | $G_e$ | A/V |
| thermal conductivity | K | W/(m*K) | electrical conductivity | $\sigma$ | A/(V*m) |
| thermal power | Q | W | electric current | I | A |
| thermal capacity | Cp | J/K | electrical capacity | C | F |
| - | - | - | electric power | P | W |
| time constant | $\tau_t$ | s | time constant | $\tau_e$ | s |

Knowing that the electrical resistance $R_{el}$ of a conductor can be expressed as:

$$R_{el} = (\rho L_c)/A = L_c/(\sigma A)$$

$\rho$ being the electrical resistivity, $\sigma$ the electrical conductivity, Lc a characteristic dimension of the conductor along a reference direction (for example a length of the conductor) and A the cross-section of the conductor, an expression defining the thermal resistance can be similarly written:

$$R_{term} = L_c/(\kappa A)$$

where $\kappa$ is the thermal conductivity, and Lc and A maintain the physical meaning of characteristic dimension of the conductor - thermal - along a reference direction, and cross-section.

In the thermal system schematised in figure 20, comprising two thermal storage devices 100, 200, 300, 400 connected as an array (the geometric shape may not necessarily represent the actual shape: this is just a case of schematisation) and separated by a thermal interruption, an axial and a radial thermal resistance can particularly be identified. The references in figure 20 respectively designate

L : the characteristic dimension in the transverse/radial direction of the thermo-accumulator unit; purely by way of example, a diameter (fig. 20) or a radius for cylindrical or spherical geometries - or even prismatic geometries, or a side of the section in case of parallelepiped-shaped geometries)
$L_{axial}$ : length in the axial/longitudinal direction of the thermo-accumulator unit
$L_{int}$ : length in the axial/longitudinal direction of the thermal interruption between two adjacent thermo-accumulator units.

Thus said, the thermal resistance in the axial/longitudinal direction can be expressed according to the following correlations (which does not provide exact dependence, but should be deemed as a proportionality correlation or simply as an operative definition):

$$R_{t,axial} = N \cdot [L_{axial}/(\kappa_{mat} \cdot L^2)] + (N-1) \cdot [L_{int}/(\kappa_{int} \cdot L^2)]$$

where, additionally to the above:

N is the number of thermal storage devices (deemed with a thermo-accumulator unit without internal thermal interruptions, hence N coincides with the number of thermo-accumulator units),
$\kappa_{mat}$ is the thermal conductivity of the material of the thermo-accumulator unit,
given that L is the characteristic dimension in the transverse/radial direction of the thermo-accumulator unit, the characteristic dimension of the radial direction - when it appears squared ($L^2$) - indicates the area of the cross-section of the thermo-accumulator unit,
$\kappa_{int}$ is the thermal conductivity of the material forming the thermal interruption (e.g. air or insulating material).

The thermal resistance in the radial direction can instead be expressed as follows (once again the correlation does not provide exact dependence, but should be deemed as a proportionality correlation or simply as an operative definition):

$$R_{t,radial} = L/(N \cdot \kappa_{mat} \cdot S_{scambio})$$

where $S_{scambio}$ is the exchange surface between flow ducts for the working fluid and the thermo-accumulator unit (as previously described), and it thus indicates the "through-flow section" of the heat in the radial direction. The other symbols maintain the meaning adopted previously.
The N number of storage devices (thus of the thermo-vector units), and hence the N-1 number of the thermal interruptions can be established, as a function of the characteristics of the storage devices 100, 200, 300, 400, supposing that the ratio $\varepsilon$ between the thermal resistance in the radial direction $R_{t,radial}$ and the thermal resistance in the axial/longitudinal direction $R_{t,axial}$ as defined above is less than 20%, or more preferably less than 10%, or even more preferably less than 2%, with the aim of limiting thermal dispersions as much as possible by means of suitable spatial segregation of the stored heat.
By way of example, by applying the criterion outlined above in inverse form, applied to N=1 storage devices (unitary array, no thermal interruption), there can be provided

$$(R_{t,radial}/R_{t,axial}) < \varepsilon,$$

from which

$$[L/(\kappa_{mat} \cdot S_{scambio})]/[L_{axial}/(\kappa_{mat} \cdot L^2)] < \varepsilon,$$

thus

$$(L/L_{axial}) \cdot (L^2/S_{scambio}) < \varepsilon$$

which corresponds to providing a relatively "long" ($L_{axial}$) storage device 100, 200, 300, 400 and/or with relatively "small" radial extension (L), thus with a high slenderness ratio $L_{axial}/L$, and with a ratio between the thermal exchange surface and characteristic cross-section $L^2/S_{scambio}$ as high as possible.
The presence of thermal interruptions according to the present invention has the purpose of reducing the thermal exchange in the longitudinal direction as much as possible, facilitating thermal exchange in radial direction. Thus, as described, this enables to guarantee a discharge process of the single storage device 100, 200, 300, 400 and an array thereof maintaining a fluid flow rate dispensing to the appliance at a constant temperature for the entire discharge process.

Should the thermo-accumulator unit extend scarcely in the axial/longitudinal direction, i.e. in the direction in which the charge fluid and discharge fluid flow - though with opposite directions (the arrays of devices 100, 200, 300, 400 operate in a counter-current manner) - the choice of the thermal diffusivity alone is not sufficient to reduce the thermal exchange in the longitudinal/axial direction (actually, the reduced length in the direction is per se an incentive for uniforming the thermal exchange temperature, especially if with high thermal diffusivity material). In this case, the thermal interruptions block such unwanted thermal exchange, hence - as clear from the description above - the number of thermal interruptions increase as the ε value reduces, and as the slenderness ratio reduces.

The thermal interruptions enable to recover, even in a low slenderness ratio body, the distribution curves of the average temperature subject of Figure 13.1 (which are naturally provided as a slender body). Such curves can be actually approximated by a series of horizontal linear sections which are as many as the storage units, each at its average operating temperature.

Lastly, the thermal interruptions allow to create an anisotropy of the thermal diffusivity between the radial direction and the axial/longitudinal direction, allowing to provide the desired performance even when the geometry of a single storage unit of an equivalent mass would not allow it.

The advantages of the present invention with respect to the known solutions for thermal storage can thus be essentially summarised in the following list:

a) absence of mobile mechanical parts

b) absence storage fluids in motion

c) construction that is simple and suitable for modular assembly

d) high ratio between storable thermal energy and storage volume due to the good volumetric thermal capacity of the storage material (high specific heat and high density) with respect to conventional oil or molten salts systems, which require high volumes of liquids

e) quick transfer of heat (high specific thermal power) due to the high thermal conductivity of the storage material

f) temperature and flow rate for dispensing the working fluid to the user almost constant or scarcely variable over time due to the possibility of modular configurations in series/parallel including several storage devices and a precise control of the dosing of the flow rate actually sent in the modules, with respect to the total flow rate required by the appliance.

g) advantageous management of the quality of the stored energy with respect to the conventional oil or molten salts storage systems, in which - during maintenance or discharge step - back-mixing and degradation of the stored heat occurs over time. As a matter of fact, in the device 1, 100, 200 (and relative arrays), adding a given number of thermal interruptions - even in the thermal storage material (depending on the thermal conductivity and spatial extension thereof and particularly required in case of thermal storage material of the fluid type) according to the invention - the transfer of energy to the working fluid can continue under optimal conditions, according to the user's specifications as long as at least one portion of the system is fully charged;

h) low operating costs and limited maintenance operations

i) low manufacturing costs, due to the fact that the most expensive materials (those capable of resisting against high pressure and thus with structural functions) are only used for pipes in which the thermovector fluidthermo-vector fluids flow, which constitute a marginal fraction of the total volume of the storage system

j) absence of dilatation joints for compensating differential dilatations, in that the pipes are free to dilate along the longitudinal extension direction thereof, in the static storage matrix, or in the metal material matrix (if present), in turn at contact with the actual storage material.

k) controllability of the charge and discharge times given that it is possible to modulate - within a wide range - the temperature and flow rate of the charge and discharge fluid due to the network of ducts and valves that is laid down when connecting the storage devices for thermal energy as an array. It is thus possible to exploit the promptness of the system to exchange large amounts of energy within little time (due to the high thermal conductivity) and without the system degrading (due to the refractory and thermal stability properties of the storage material).

Obviously, the construction details and the embodiments may widely vary with respect to what has been described and illustrated, without departing from the scope of protection of the present invention as defined by the attached claims.

| Table 1 - FOMs for various materials | | | | | | | |
|---|---|---|---|---|---|---|---|
| | Graphite | Aluminium | Cast iron | Concrete* | Sand* | Refractory bricks* | Limit values according to the invention |
| $\kappa$ [W/(m*K)] | 120 | 235 | 35 | 1.8 | 0.35 | 1 | > 30 |
| $c_p$ [J/(kg*K)] | 710 | 900 | 420 | 880 | 910 | 1150 | > 600 |
| $\rho$ [kg/m3] | 1730 | 2700 | 7000 | 2300 | 1550 | 2000 | > 1000 |
| $E_{wt}$ [kWh/kg] | 0.053 | 0.067 | 0.033 | 0.065 | 0.061 | 0.083 | > 0.02 |
| $E_{vol}$ [kWh/m$^3$] | 91 | 180 | 229 | 149 | 95 | 166 | > 45 |
| $T_{max}$ [°C] | 3000 | 650 | 1200 | 500 | 1700 | 1400 | > 350 |
| $\alpha$ [mm2/s] | 98 | 97 | 12 | 0.89 | 0.25 | 0.43 | $10 < \alpha < 150$ <br> $35 < \alpha < 120$ (preferably) <br> $50 < \alpha < 100$ (more preferably) |
| $\tau$ [min] | 9.8 | 11 | 40 | 548 | 1944 | 1108 | < 80** |
| $\tau_{spec}$ [min/kWh] | 6.24 | 3.54 | 10.5 | 221 | 1074 | 375 | < 25** |
| $\sigma_\tau$ [m$^2$/(kWh/min)] | 0.293 | 0.166 | 0.470 | 10.4 | 55.6 | 18.1 | < 1** |
| **\* non-usable material, provided solely for comparison purpose; \*\* operating cycle: Tmin=60°C, Tmax 340°C** | | | | | | | |

**Claims**

1. A storage device for thermal energy (100; 200; 300; 400) including:

   - a thermo-vector unit (102; 202; 302; 402), and
   - a thermo-accumulator unit (104; 204; 304; 404)

   wherein:

   - said thermo-vector unit (102; 202; 302; 402) includes one or more flow ducts (106, 106!, 106*; 206; 306!, 306*; 406!, 406*) for working fluid,
   - said thermo-accumulator unit (104; 204; 304; 404) includes a thermal storage material configured for operating in a thermal exchange relationship with said working fluid and for storage and release of thermal energy as a consequence of a thermal exchange with said working fluid, said thermal storage material having a thermal diffusivity comprised between 10 and 150 mm$^2$/s, and
   - said thermo-vector unit (102; 202; 302; 402) is embedded within said thermo-accumulator unit (104; 204; 304; 404),

   the storage device (100; 200; 300; 400) being **characterized in that** the storage material of the thermo-accumulator unit (104; 204; 304; 404) comprises thermal interruptions transverse to a flow direction of the working fluid in the thermo-vector unit.

2. The storage device (200; 300; 400) according to claim 1, wherein said thermo-accumulator unit (204; 304; 404) provides a matrix (204A, 204B; 304A, 304B, 304C; 404A, 404B, 404C) for one or more flow ducts (206; 306!, 306*; 406!, 406*) of said thermo-vector unit (202; 302; 402).

3. The storage device (100; 200) according to any of the previous claims, wherein said thermal storage material has a thermal diffusivity comprised between 35 and 120 mm$^2$/s, and more preferably between 50 and 100 mm$^2$/s.

4. The storage device (100; 200; 300; 400) according to any of the previous claims, wherein, named:

   L : characteristic dimension in a transverse/radial direction of the thermo-accumulator unit
   $L_{axial}$ : length in the axial/longitudinal direction of the thermo-accumulator unit, said axial/longitudinal direction being a flow direction for said working fluid,
   $\kappa_{mat}$ : thermal conductivity of the material of the thermo-accumulator unit,
   $S_{scambio}$ : heat exchange surface between said flow ducts for the working fluid and the thermo-accumulator unit, and defined:

   Thermal resistance in the radial direction

   $$R_{t,radial} = L/(N{\cdot}\kappa_{mat}{\cdot}S_{scambio})$$

   Thermal resistance in the axial/longitudinal direction

   $$R_{t,axial} = [L_{axial}/(\kappa_{mat}{\cdot}L^2)]$$

   the following applies:
   $(R_{t,radial}/R_{t,axial}) < 0.2$, preferably $(R_{t,radial}/R_{t,axial}) < 0.1$, more preferably $(R_{t,radial}/R_{t,axial}) < 0.02$.

5. An array of storage devices for thermal energy including a plurality of storage devices for thermal energy (100; 200; 300; 400) according to any one of the preceding claims hydraulically connected to each other, wherein the thermo-vector units (102; 202; 302; 402) of adjacent and hydraulically connected storage devices for thermal energy (100; 200; 300; 400) have a thermal interruption therebetween.

6. The array of storage devices for thermal energy according to claim 5, wherein, named:

   L : characteristic dimension in a transverse/radial direction of the thermo-accumulator unit
   $L_{axial}$ : length in the axial/longitudinal direction of the thermo-accumulator unit, said axial/longitudinal direction being a flow direction for said working fluid,
   $\kappa_{mat}$ : thermal conductivity of the material of the thermo-accumulator unit,
   $\kappa_{int}$: thermal conductivity of the material forming the thermal interruption
   $S_{scambio}$ : heat exchange surface between said flow ducts for the working fluid and the thermo-accumulator unit,
   N : number of thermo-accumulator units in the array N-1 : number of thermal interruptions in the array
   $L_{int}$ : length in the axial/longitudinal direction of the thermal interruption between two adjacent thermo-accumulator units
   and defined:

   Thermal resistance in the radial direction

   $$R_{t,radial} = L/(N{\cdot}\kappa_{mat}{\cdot}S_{scambio})$$

   Thermal resistance in the axial/longitudinal direction

   $$R_{t,axial} = N{\cdot}[L_{axial}/(\kappa_{mat}{\cdot}L^2)] + (N{-}1){\cdot}[L_{int}/(\kappa_{int}{\cdot}L^2)]$$

   the following applies:
   $(R_{t,radial}/R_{t,axial}) < 0.2$, preferably $(R_{t,radial}/R_{t,axial}) < 0.1$, more preferably $(R_{t,radial}/R_{t,axial}) < 0.02$.

**Patentansprüche**

1. Speichervorrichtung für thermische Energie (100; 200; 300; 400), umfassend:

   - eine Wärmeträgereinheit (102; 202; 302; 402), und
   - eine thermische Akkumulatoreinheit (104; 204; 304; 404), wobei:

      - die Wärmeträgereinheit (102; 202; 302; 402) einen oder mehrere Strömungskanäle (106, 106!, 106*; 206; 306!, 306*; 406!, 406*) für Arbeitsfluid umfasst,
      - die thermische Akkumulatoreinheit (104; 204; 304; 404) ein Wärmespeichermaterial umfasst, das für den Betrieb in einer Wärmeaustauschbeziehung mit dem Arbeitsfluid und zum Speichern und Abgeben von thermischer Energie infolge eines Wärmeaustauschs mit dem Arbeitsfluid ausgestaltet ist, wobei das Wärmespeichermaterial eine Temperaturleitfähigkeit zwischen 10 und 150 mm$^2$/s aufweist, und
      - die Wärmeträgereinheit (102; 202; 302; 402) in die thermische Akkumulatoreinheit (104; 204; 304; 404) eingebettet ist,

   wobei die Speichervorrichtung (100; 200; 300; 400) **dadurch gekennzeichnet ist, dass** das Speichermaterial der thermischen Akkumulatoreinheit (104; 204; 304; 404) thermische Unterbrechungen quer zu einer Strömungsrichtung des Arbeitsfluids in der Wärmeträgereinheit umfasst.

2. Speichervorrichtung (200; 300; 400) nach Anspruch 1, wobei die thermische Akkumulatoreinheit (204; 304; 404) eine Matrix (204A, 204B; 304A, 304B, 304C; 404A, 404B, 404C) für einen oder mehrere Strömungskanäle (206; 306!, 306*; 406!, 406*) der Wärmeträgereinheit (202; 302; 402) bereitstellt.

3. Speichervorrichtung (100; 200) nach einem der vorhergehenden Ansprüche, wobei das Wärmespeichermaterial eine Temperaturleitfähigkeit zwischen 35 und 120 mm$^2$/s und noch bevorzugter zwischen 50 und 100 mm$^2$/s aufweist.

4. Speichervorrichtung (100; 200; 300; 400) nach einem der vorhergehenden Ansprüche, wobei, wenn

   L : die charakteristische Abmessung in einer Quer- /radialen Richtung der thermischen Akkumulatoreinheit ist,
   L$_{axial}$ : die Länge in der axialen/Längsrichtung der thermischen Akkumulatoreinheit ist, wobei die axiale/Längsrichtung eine Strömungsrichtung des Arbeitsfluids ist,
   κ$_{mat}$ : die Wärmeleitfähigkeit des Materials der thermischen Akkumulatoreinheit ist,
   S$_{scambio}$ : die Wärmeaustauschfläche zwischen den Strömungskanälen für das Arbeitsfluid und der thermischen Akkumulatoreinheit ist,
   und Folgendes definiert ist:

   Wärmewiderstand in der radialen Richtung

   $$R_{t,radial} = L/(N \cdot \kappa_{mat} \cdot S_{scambio})$$

   Wärmewiderstand in der axialen/Längsrichtung

   $$R_{t,axial} = [L_{axial}/(\kappa_{mat} \cdot L^2)]$$

   Folgendes gilt:
   $(R_{t,radial}/R_{t,axial}) < 0,2$, vorzugsweise $(R_{t,radial}/R_{t,axial}) < 0,1$, noch bevorzugter $(R_{t,radial}/R_{t,axial}) < 0,02$.

5. Anordnung von Speichervorrichtungen für thermische Energie, umfassend eine Vielzahl von Speichervorrichtungen für thermische Energie (100; 200; 300; 400) nach einem der vorhergehenden Ansprüche, die hydraulisch miteinander verbunden sind, wobei die Wärmeträgereinheiten (102; 202; 302; 402) von benachbarten und hydraulisch verbundenen Speichervorrichtungen für thermische Energie (100; 200; 300; 400) eine thermische Unterbrechung dazwischen aufweisen.

6. Anordnung von Speichervorrichtungen für thermische Energie nach Anspruch 5, wobei, wenn:

L : die charakteristische Abmessung in einer Quer-/radialen Richtung der thermischen Akkumulatoreinheit ist,

$L_{axial}$ : die Länge in der axialen/Längsrichtung der thermischen Akkumulatoreinheit ist, wobei die axiale/Längsrichtung eine Strömungsrichtung des Arbeitsfluids ist,

$\kappa_{mat}$ : die Wärmeleitfähigkeit des Materials der thermischen Akkumulatoreinheit ist,

$\kappa_{int}$: die Wärmeleitfähigkeit des Materials ist, das die thermische Unterbrechung bildet,

$S_{scambio}$ : die Wärmeaustauschfläche zwischen den Strömungskanälen für das Arbeitsfluid und der thermischen Akkumulatoreinheit ist,

N : die Anzahl der thermischen Akkumulatoreinheiten in der Anordnung ist,

N-1 : die Anzahl der thermischen Unterbrechungen in der Anordnung ist,

$L_{int}$ : die Länge in der axialen/Längsrichtung der thermischen Unterbrechung zwischen zwei benachbarten thermischen Akkumlatoreinheiten ist,

und Folgendes definiert ist:

Wärmewiderstand in der radialen Richtung

$$R_{t,radial} = L/(N \cdot \kappa_{mat} \cdot S_{scambio})$$

Wärmewiderstand in der axialen/Längsrichtung

$$R_{t,axial} = N \cdot [L_{axial}/(\kappa_{mat} \cdot L^2)] + (N-1) \cdot [L_{int}/(\kappa_{int} \cdot L^2)]$$

Folgendes gilt:

$(R_{t,radial}/R_{t,axial}) < 0,2$, vorzugsweise $(R_{t,radial}/R_{t,axial}) < 0,1$, noch bevorzugter $(R_{t,radial}/R_{t,axial}) < 0,02$.

## Revendications

1. Dispositif de stockage d'énergie thermique (100 ; 200 ; 300 ; 400) comprenant :

   - une unité thermo-vecteur (102 ; 202 ; 302 ; 402), et
   - une unité thermo-accumulateur (104 ; 204 ; 304 ; 404)

   dans lequel :

   - ladite unité thermo-vecteur (102 ; 202 ; 302 ; 402) comprend un ou plusieurs conduits d'écoulement (106, 106!, 106* ; 206 ; 306!, 306* ; 406!, 406*) pour le fluide de travail,
   - ladite unité thermo-accumulateur (104 ; 204 ; 304 ; 404) comprend un matériau de stockage thermique configuré pour fonctionner dans une relation d'échange thermique avec ledit fluide de travail et pour stocker et libérer de l'énergie thermique à la suite d'un échange thermique avec ledit fluide de travail, ledit matériau de stockage thermique ayant une diffusivité thermique comprise entre 10 et 150 mm$^2$/s, et
   - ladite unité thermo-vecteur (102 ; 202 ; 302 ; 402) est incorporée dans ladite unité thermo-accumulateur (104 ; 204 ; 304 ; 404),

   le dispositif de stockage (100 ; 200 ; 300 ; 400) étant **caractérisé en ce que** le matériau de stockage de l'unité thermo-accumulateur (104 ; 204 ; 304 ; 404) comprend des interruptions thermiques transversales à une direction d'écoulement du fluide de travail dans l'unité thermo-vecteur.

2. Dispositif de stockage (200 ; 300 ; 400) selon la revendication 1, dans lequel ladite unité thermo-accumulateur (204 ; 304 ; 404) fournit une matrice (204A, 204B ; 304A, 304B, 304C ; 404A, 404B, 404C) pour un ou plusieurs conduits d'écoulement (206 ; 306!, 306* ; 406!, 406*) de ladite unité thermo-vecteur (202 ; 302 ; 402).

3. Dispositif de stockage (100 ; 200) selon l'une des revendications précédentes, dans lequel ledit matériau de stockage thermique a une diffusivité thermique comprise entre 35 et 120 mm$^2$/s, et plus préférablement entre 50 et 100 mm$^2$/s.

4. Dispositif de stockage (100 ; 200 ; 300 ; 400) selon l'une des revendications précédentes, dans lequel, on nomme :

L : dimension caractéristique dans une direction transversale/radiale de l'unité thermo-accumulateur

$L_{axial}$: longueur dans la direction axiale/longitudinale de l'unité thermo-accumulateur, ladite direction axiale/longitudinale étant une direction d'écoulement dudit fluide de travail,

$\kappa_{mat}$ : conductivité thermique du matériau de l'unité thermo-accumulateur,

$S_{scambio}$ : surface d'échange thermique entre lesdits conduits d'écoulement du fluide de travail et l'unité thermo-accumulateur,

et on définit :

Résistance thermique dans la direction radiale

$$R_{t,radial} = L/(N \cdot \kappa_{mat} \cdot S_{scambio})$$

Résistance thermique dans la direction axiale/longitudinale

$$R_{t,axial} = [L_{axial}/(\kappa_{mat} \cdot L^2)]$$

ce qui suit s'applique :

$(R_{t,radial}/R_{t,axial}) < 0,2$, de préférence $(R_{t,radial}/R_{t,axial}) < 0,1$, plus préférablement $(R_{t,radial}/R_{t,axial}) < 0,02$.

5.  Réseau de dispositifs de stockage d'énergie thermique comprenant une pluralité de dispositifs de stockage d'énergie thermique (100 ; 200 ; 300 ; 400) selon l'une quelconque des revendications précédentes reliés hydrauliquement les uns aux autres, dans lequel les unités thermo-vecteurs (102 ; 202 ; 302 ; 402) de dispositifs de stockage d'énergie thermique adjacents et reliés hydrauliquement (100 ; 200 ; 300 ; 400) présentent une interruption thermique entre elles.

6.  Réseau de dispositifs de stockage d'énergie thermique selon la revendication 5, dans lequel, on nomme :

L : dimension caractéristique dans une direction transversale/radiale de l'unité thermo-accumulateur

$L_{axial}$: longueur dans la direction axiale/longitudinale de l'unité thermo-accumulateur, ladite direction axiale/longitudinale étant une direction d'écoulement dudit fluide de travail,

$\kappa_{mat}$ : conductivité thermique du matériau de l'unité thermo-accumulateur,

$\kappa_{int}$: conductivité thermique du matériau formant l'interruption thermique

$S_{scambio}$: surface d'échange thermique entre lesdits conduits d'écoulement du fluide de travail et l'unité thermo-accumulateur,

N : nombre d'unités thermo-accumulateurs dans le réseau

N-1 : nombre d'interruptions thermiques dans le réseau

$L_{int}$ : longueur dans la direction axiale/longitudinale de l'interruption thermique entre deux unités thermo-accumulateurs adjacentes

et on définit :

Résistance thermique dans la direction radiale

$$R_{t,radial} = L/(N \cdot \kappa_{mat} \cdot S_{scambio})$$

Résistance thermique dans la direction axiale/longitudinale

$$R_{t,axial} = N \cdot [L_{axial}/(\kappa_{mat} \cdot L^2)] + (N-1) \cdot [L_{int}/(\kappa_{int} \cdot L^2)]$$

ce qui suit s'applique :

$(R_{t,radial}/R_{t,axial}) < 0,2$, de préférence $(R_{t,radial}/R_{t,axial}) < 0,1$, plus préférablement $(R_{t,radial}/R_{t,axial}) < 0,02$.

## FIG. 1

FIG. 2

FIG. 3

FIG. 4

FIG. 5

EP 3 665 427 B1

FIG. 6

A1_T

J3!

J2!

BPC

A.

!OUT
!BP
!IN

FIG. 7

A1_BT

J3*

J2*

BPC*

B.

*OUT
*BP
*IN

I — A1_T

I — A1_BT

!IN
!OUT
!BP

4        4

*BP
*OUT        *IN

FIG. 8

FIG. 9

A.

106!
206!

100,200          J1!          100,200          J2!          100,200

!OUT

BPC!                                                                              J3!
!BP

!IN

106!
206!          100,200                    100,200                    100,200

**FIG. 10**

B.

106*
206*          100,200
100,200          J1*          100,200          J2*          100,200

*OUT

BPC*                                                                              J3*
*BP

*IN

106*
206*          100,200                    100,200                    100,200

BPC!                                                          !BP

106!/206!                                                    !OUT
!IN

*OUT                                                         *IN

*BP
106*/206*          BPC*

**FIG. 11**

FIG. 12

FIG. 13.1

FIG. 13.2

FIG. 14

# FIG. 15A

EP 3 665 427 B1

## FIG. 16

## FIG. 15B

EP 3 665 427 B1

FIG. 17

S400

400

404A

404A

404A

404A

XVII/B

400

404B

404B

404B

404B

XVII/A

400

!OUT

XVII/A

!IN

400

404C

400

400

XVII/B

*OUT

400

*IN

404C

EP 3 665 427 B1

34

FIG. 17A

FIG. 17B

FIG. 17C

WO 2019/030674

FIG. 18

FIG. 19

FIG. 20

*OUT

$L_{axial}$

!IN

$L_{int}$

106, 106!, 206; 306!, 406!

100, 200, 300, 400

106, 106*; 206; 306*; 406*

L

*IN

100, 200, 300, 400

!OUT

EP 3 665 427 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016097603 A1
- WO 2011055307 A2
- WO 102016000009566 A